# EUROPEAN PATENT SPECIFICATION

(11) **EP 4 368 325 B1**
(45) Date of publication and mention of the grant of the patent: **30.07.2025**
(21) Application number: 22205960.2
(22) Date of filing: 08.11.2022
(51) Int. Cl.: B23F 19/10, B23F 21/20, B23C 5/20

(54) **METHOD FOR CHAMFERING FLANK EDGES OF TEETH ON A CYLINDRICAL TOOTHED WORKPIECE**
VERFAHREN ZUM ANFASEN VON FLANKENKANTEN VON ZÄHNEN AN EINEM ZYLINDERFÖRMIG VERZAHNTEN WERKSTÜCK
PROCÉDÉ DE CHANFREINAGE DES BORDS DE FLANCS DE DENTS D'UNE PIÈCE DENTÉE CYLINDRIQUE

(43) Date of publication of application: 15.05.2024
(73) Proprietor: AB Sandvik Coromant, 811 81 Sandviken (SE)
(72) Inventor: Mohanty, Swetapadma, 811 81 Sandviken (SE); Jia, Tong, 811 81 Sandviken (SE); Bosch, Achim, 811 81 Sandviken (SE)
(74) Representative: Sandvik

(56) References cited:
- EP-A2- 1 022 082
- WO-A1-2007/065945
- WO-A1-2022/013068
- DE-A1- 102011 050 499

## Description

### FIELD OF THE INVENTION AND PRIOR ART

The present invention relates to a method for chamfering flank edges of internal or external teeth on a cylindrical toothed workpiece at at least one of two opposite end faces of the workpiece.

External or internal gear teeth or spline teeth may be machined on a cylindrical workpiece by cutting technologies using different types of cutting tools. In such a case, the resulting teeth on the workpiece will have burrs and sharp edges at the intersections between the tooth flank surfaces of the teeth and the respective end face of the workpiece following the initial machining operation, i.e. at the flank edges of the teeth at the opposite end faces of the workpiece. A subsequent finishing operation may therefore be required in order to chamfer the flank edges of the teeth at the opposite end faces of the workpiece and thereby remove said burrs and sharp edges.

WO 2022/013068 A1 discloses a method for chamfering flank edges of teeth on a cylindrical toothed workpiece at an end face of the workpiece by means of a milling tool, wherein the workpiece and the milling tool are rotated with a predefined relationship between the speed of rotation of the milling tool and the speed of rotation of the workpiece, while keeping the axis of rotation of the milling tool in parallel with the central axis of the workpiece. In the method according to WO 2022/013068 A1, the flank edges are chamfered in such a manner that a first flank edge on a tooth is chamfered in a direction from the tooth tip to the tooth root of the tooth, whereupon an opposite second flank edge on an adjacent tooth is chamfered in a direction from the tooth root to the tooth tip of the tooth. The milling tool disclosed in WO 2022/013068 A1 is configured to be moved into contact with a forwardly facing end face of the workpiece. When the flank edges at a forwardly facing first end face of the workpiece have been chamfered, the workpiece has to be repositioned in the workpiece holder to make the opposite second end face of the workpiece face forwards towards the milling tool before proceeding with a chamfering of the flank edges at this second end face of the workpiece.

### OBJECT OF THE INVENTION

The object of the present invention is to achieve a further development of a method of the above-mentioned type for chamfering flank edges of teeth on a cylindrical toothed workpiece so as to provide a method that is improved in at least some aspect.

### SUMMARY OF THE INVENTION

According to a first aspect of the invention, said object is achieved by means of a method having the features defined in claim 1.

The method according to the first aspect of the invention is a method for chamfering flank edges of internal or external teeth on a cylindrical toothed workpiece at at least one of two opposite end faces of the workpiece, wherein each one of said teeth has a tooth tip, a tooth root, a first tooth flank surface extending between the tooth tip and the tooth root on a first side of the tooth and a second tooth flank surface extending between the tooth tip and the tooth root on an opposite second side of the tooth, a first flank edge being formed at an intersection between the first tooth flank surface and a first one of the two end faces of the workpiece, a second flank edge being formed at an intersection between the second tooth flank surface and said first one of the two end faces of the workpiece, a third flank edge being formed at an intersection between the first tooth flank surface and a second one of the two end faces of the workpiece and a fourth flank edge being formed at an intersection between the second tooth flank surface and said second one of the two end faces of the workpiece, wherein the workpiece is rotatable by a machine about a central axis of the workpiece and wherein the chamfering is performed by means of one or more milling tools, each of which comprising a tool body and one or more cutting edges provided on the tool body and each of which being rotatable by the machine about an axis of rotation of the tool body and moveable by the machine in relation to the workpiece in an axial direction of the workpiece and in different directions in a plane perpendicular to the central axis of the workpiece with the axis of rotation of the tool body in parallel with the central axis of the workpiece, the method comprising the following steps:
a) rotating the workpiece about its central axis in a direction of rotation with the second tooth flank surfaces as leading tooth flank surfaces and with the first tooth flank surfaces as trailing tooth flank surfaces and simultaneously rotating one of said one or more milling tools about the axis of rotation of the tool body, with a predefined relationship between the speed of rotation of the milling tool and the speed of rotation of the workpiece, in the same direction of rotation as the workpiece when said teeth are internal teeth on the workpiece or in an opposite direction of rotation when said teeth are external teeth on the workpiece, while keeping the axis of rotation of the tool body in parallel with the central axis of the workpiece and moving the milling tool along a predefined path in relation to the workpiece with at least one of said one or more cutting edges of the milling tool facing the first one of the two end faces of the workpiece such that this at least one cutting edge chamfers the first flank edges of said teeth in a machining direction from the tooth root to the tooth tip of each tooth; and
b) rotating the workpiece about its central axis in a direction of rotation with the first tooth flank surfaces as leading tooth flank surfaces and with the second tooth flank surfaces as trailing tooth flank surfaces and simultaneously rotating one of said one or more milling tools about the axis of rotation of the tool body, with a predefined relationship between the speed of rotation of the milling tool and the speed of rotation of the workpiece, in the same direction of rotation as the workpiece when said teeth are internal teeth on the workpiece or in an opposite direction of rotation when said teeth are external teeth on the workpiece, while keeping the axis of rotation of the tool body in parallel with the central axis of the workpiece and moving the milling tool along a predefined path in relation to the workpiece with at least one of said one or more cutting edges of the milling tool facing the first one of the two end faces of the workpiece such that this at least one cutting edge chamfers the second flank edges of said teeth in a machining direction from the tooth root to the tooth tip of each tooth.

Thus, the chamfering of each one of the first and second flank edges at the above-mentioned first end face of the workpiece is started at the deepest part of the gap between two teeth, i.e. at the so-called bottom land or tooth root surface, and ended at the tooth tip of the associated tooth. It has turned out that burr formation may occur at the tooth root area when chamfering of a flank edge is performed in a machining direction from the tooth tip to the tooth root, especially with a cutting edge that has been in use for a while and has started to get worn. It has also turned out that such burr formation is avoided when the chamfering of a flank edge is performed in the opposite machining direction from the tooth root to the tooth tip. Thus, a chamfering of each flank edge at the first end face of the workpiece in a machining direction from the tooth root to the tooth tip of the associated tooth results in improved quality of the chamfers produced on theses flank edges.

In this description and the subsequent claims, the expression "leading tooth flank surfaces" refers to the tooth flank surfaces that are facing in the direction of rotation, i.e. forwards, when the toothed workpiece is rotated about its central axis, whereas the expression "trailing tooth flank surfaces" refers to the tooth flank surfaces that are facing in the opposite direction, i.e. backwards, when the toothed workpiece is rotated about its central axis.

According to an embodiment of the invention, said predefined path for the movement of the milling tool in relation to the workpiece in step a comprises at least one part in which the milling tool is moved in its axial direction to thereby move the cutting edge or cutting edges facing the first one of the two end faces of the workpiece in a direction towards this end face, and/or said predefined path for the movement of the milling tool in relation to the workpiece in step b comprises at least one part in which the milling tool is moved in its axial direction to thereby move the cutting edge or cutting edges facing the first one of the two end faces of the workpiece in a direction towards this end face.

According to another embodiment of the invention, said predefined path for the movement of the milling tool in relation to the workpiece in step a comprises at least one part in which the distance between the axis or rotation of the tool body and the central axis of the workpiece is changed, and/or said predefined path for the movement of the milling tool in relation to the workpiece in step b comprises at least one part in which the distance between the axis or rotation of the tool body and the central axis of the workpiece is changed. The change of the distance between the axis or rotation of the tool body and the central axis of the workpiece may be achieved by moving the milling tool in directions perpendicular to the axis of rotation of the tool body and/or by moving the workpiece in directions perpendicular to the central axis of the workpiece.

The predefined path for the movement of the milling tool in relation to the workpiece in step a and/or step b may of course also comprise one or more parts in which the milling tool is moved in its axial direction at the same time as the distance between the axis or rotation of the tool body and the central axis of the workpiece is changed.

According to another embodiment of the invention, the method comprises the following additional steps:
c) rotating the workpiece about its central axis in a direction of rotation with the second tooth flank surfaces as leading tooth flank surfaces and with the first tooth flank surfaces as trailing tooth flank surfaces and simultaneously rotating one of said one or more milling tools about the axis of rotation of the tool body, with a predefined relationship between the speed of rotation of the milling tool and the speed of rotation of the workpiece, in the same direction of rotation as the workpiece when said teeth are internal teeth on the workpiece or in an opposite direction of rotation when said teeth are external teeth on the workpiece, while keeping the axis of rotation of the tool body in parallel with the central axis of the workpiece and moving the milling tool along a predefined path in relation to the workpiece with at least one of said one or more cutting edges of the milling tool facing the second one of the two end faces of the workpiece such that this at least one cutting edge chamfers the third flank edges of said teeth in a machining direction from the tooth root to the tooth tip of each tooth; and
d) rotating the workpiece about its central axis in a direction of rotation with the first tooth flank surfaces as leading tooth flank surfaces and with the second tooth flank surfaces as trailing tooth flank surfaces and simultaneously rotating one of said one or more milling tools about the axis of rotation of the tool body, with a predefined relationship between the speed of rotation of the milling tool and the speed of rotation of the workpiece, in the same direction of rotation as the workpiece when said teeth are internal teeth on the workpiece or in an opposite direction of rotation when said teeth are external teeth on the workpiece, while keeping the axis of rotation of the tool body in parallel with the central axis of the workpiece and moving the milling tool along a predefined path in relation to the workpiece with at least one of said one or more cutting edges of the milling tool facing the second one of the two end faces of the workpiece such that this at least one cutting edge chamfers the fourth flank edges of said teeth in a machining direction from the tooth root to the tooth tip of each tooth.

Hereby, also each flank edge at the second end face of the workpiece is chamfered in a machining direction from the tooth root to the tooth tip of the associated tooth, which results in improved quality of the chamfers produced on theses flank edges.

According to another embodiment of the invention, the workpiece is rotated in a first direction of rotation in step a and rotated in a second direction of rotation opposite to the first direction of rotation in step b, while being maintained in the same orientation as in step a. Hereby, the first and second flank edges at the first end face of the workpiece are chamfered in a machining direction from the tooth root to the tooth tip of the teeth in steps a and b without requiring any repositioning of the workpiece between these steps.

According to another embodiment of the invention:
- the chamfering in step a and the chamfering in step b are performed by means of one and the same milling tool, which comprises at least one first cutting edge that faces the first one of the two end faces of the workpiece and chamfers the first and second flank edges of said teeth in steps a and b, wherein the tool body of this milling tool at a rear end has a rear part configured for attachment to the machine; and
- said at least one first cutting edge extends substantially rectilinearly in a plane containing the axis of rotation of the tool body of the milling tool and is formed at an intersection between a first surface and a second surface on a cutting insert releasably mounted to an insert seat provided in the tool body, wherein said first surface functions as a rake face and said second surface functions as a clearance face when the milling tool is rotated in one direction of rotation about the axis of rotation of the tool body and chamfering is performed by this at least one first cutting edge, whereas said first surface functions as a clearance face and said second surface functions as a rake face when the milling tool is rotated in another opposite direction of rotation about the axis of rotation of the tool body and chamfering is performed by this at least one first cutting edge.

The chamfering of the first flank edges in step a and the chamfering of the second flank edges in step b are preferably performed by means of one and the same milling tool. However, it would as an alternative be possible to perform the chamfering of the first flank edges in step a by means of a first milling tool with a cutting edge adapted for milling only in one direction of rotation and perform the chamfering of the second flank edges in step b by means of a second milling tool with a cutting edge adapted for milling only in the opposite direction of rotation.

According to another embodiment of the invention, said first surface and said second surface are mirror symmetrical to each other with respect to the plane in which said at least one first cutting edge extends. The cutting performance of this first cutting edge will hereby be the same in both directions of rotation of the milling tool.

According to another embodiment of the invention, said at least one first cutting edge has a front end and an opposite rear end, the rear end of this at least one first cutting edge being located closer to the rear part of the tool body than the front end of this at least one first cutting edge, wherein the front end of this at least one first cutting edge is located closer to the axis of rotation of the tool body than the rear end of this at least one first cutting edge and the distance between this at least one first cutting edge and the axis of rotation of the tool body is gradually increasing as seen in a direction along this at least one first cutting edge from the front end thereof to the rear end thereof. Said at least one first cutting edge preferably has such an inclination in the plane in which it extends that an extension of this first cutting edge forms an angle with the axis of rotation of the tool body that is larger than or equal to 20° and smaller than 90°, preferably 30-80°.

According to another embodiment of the invention:
- the chamfering in step c and the chamfering in step d are performed by means of the same milling tool as the chamfering in steps a and b;
- the milling tool comprises at least one second cutting edge that faces the second one of the two end faces of the workpiece and chamfers the third and fourth flank edges of said teeth in steps c and d;
- said at least one first cutting edge faces away from the rear part of the tool body and said at least one second cutting edge faces the rear part of the tool body and is located closer to the rear part than said at least one first cutting edge;
- said at least one second cutting edge extends substantially rectilinearly in a plane containing the axis of rotation of the tool body and is formed at an intersection between a third surface and a fourth surface on said cutting insert, wherein said third surface functions as a rake face and said fourth surface functions as a clearance face when the milling tool is rotated in one direction of rotation about the axis of rotation of the tool body and chamfering is performed by this at least one second cutting edge, whereas said third surface functions as a clearance face and said fourth surface functions as a rake face when the milling tool is rotated in another opposite direction of rotation about the axis of rotation of the tool body and chamfering is performed by this at least one second cutting edge;
- the tool body comprises a cutting part, which is located at a distance from the rear part, and an elongated shank part, which carries the cutting part and extends from the cutting part towards the rear part and which has a front end facing the cutting part, an opposite rear end and a peripheral surface extending around the shank part between the rear end and the front end thereof, wherein the shank part has a longitudinal central axis that coincides with the axis of rotation of the tool body; and
- said at least one second cutting edge is located at a longer distance from the axis of rotation of the tool body than a radially outermost part of the peripheral surface of the shank part.

According to a first alternative, the cutting part constitutes an axially foremost part of the tool body, i.e. the part of the tool body that is most distant from the rear part of the tool body. According to a second alternative, the tool body comprises a front part that projects from the cutting part on the side thereof facing away from the rear part, wherein the front end of the first cutting edge is located at a longer distance from the axis of rotation than a radially outermost part of this front part.

The design of the tool body with the elongated shank part between the cutting part and the rear part, the arrangement of the first and second cutting edges on the cutting part as defined above and the position of the second cutting edge in relation to the peripheral surface of the shank part as defined above, imply that the milling tool may be used for chamfering the flank edges of internal or external teeth on a cylindrical toothed workpiece at both end faces of the workpiece without requiring any repositioning of the workpiece. Thus, the workpiece may remain clamped to a suitable workpiece holder of the machine in one and the same orientation during the entire chamfering process, which saves time. The above-mentioned first cutting edge may be used for chamfering the flank edges of the teeth on a toothed workpiece at an end face of the workpiece facing away from a workpiece holder that carries the workpiece, and the above-mentioned second cutting edge may be used for chamfering the flank edges of the teeth on the workpiece at the opposite end face of the workpiece. The chamfering process may start with a chamfering of the flank edges at the end face of the workpiece that faces away from the workpiece holder and thereafter proceed with a chamfering of the flank edges at the end face of the workpiece that faces the workpiece holder. As an alternative, the chamfering process may start with a chamfering of the flank edges at the end face of the workpiece that faces the workpiece holder and thereafter proceed with a chamfering of the flank edges at the end face of the workpiece that faces away from the workpiece holder.

The plane in which said second cutting edge extends may be angularly offset with respect to the axis of rotation from the plane in which said first cutting edge extends. However, the plane in which said second cutting edge extends preferably coincides with the plane in which said first cutting edge extends.

The shank part is preferably rod-shaped and is to be longer than the length of the workpiece, i.e. longer than the axial distance between the two opposite end faces of the workpiece. The shank part may for instance have a length of 25-500 mm, preferably 50-200 mm, more preferably 100-150 mm.

According to another embodiment of the invention, said third surface and said fourth surface are mirror symmetrical to each other with respect to the plane in which said at least one second cutting edge extends. The cutting performance of this second cutting edge will hereby be the same in both directions of rotation of the milling tool.

According to another embodiment of the invention, said at least one second cutting edge has a front end and an opposite rear end, the rear end of this at least one second cutting edge being located closer to the rear part of the tool body than the front end of this at least one second cutting edge, wherein the rear end of this at least one second cutting edge is located closer to the axis of rotation of the tool body than the front end of this at least one second cutting edge and the distance between this at least one second cutting edge and the axis of rotation of the tool body is gradually increasing as seen in a direction along this at least one second cutting edge from the rear end thereof to the front end thereof. Said at least one second cutting edge preferably has such an inclination in the plane in which it extends that an extension of this second cutting edge forms an angle with the axis of rotation of the tool body that is larger than or equal to 20° and smaller than 90°, preferably 30-80°. The radial distance between the rear end of the second cutting edge and the radially outermost part of the peripheral surface of the shank part has to be suitably adapted to the tooth depth of the teeth on the toothed workpiece to be machined and is preferably 2-40 mm, preferably 6-30 mm. Said radial distance is with advantage larger than the tooth depth but may as an alternative, in view of the extension of the second cutting edge in radial direction, be somewhat smaller that the tooth depth. In the case when the tool body comprises a front part that projects from the cutting part on the side thereof facing away from the rear part, the radial distance between the front end of the first cutting edge and a radially outermost part of a peripheral surface of this front part is preferably 2-40 mm, more preferably 6-30 mm, and preferably but not necessarily equal to the radial distance between the rear end of the second cutting edge and the radially outermost part of the peripheral surface of the shank part.

Said first cutting edge and said second cutting edge are preferably mirror symmetrical to each other with respect to a plane of symmetry that extends halfway between the first and second cutting edges perpendicularly to the axis of rotation of the tool body.

The above-mentioned internal or external teeth on the workpiece are preferably gear teeth or spline teeth, preferably of module 2-12.

According to a second aspect, the invention relates to a computer based program having instructions which when executed by a CNC machine causes the CNC machine to perform the steps according to any of the above described methods. Said computer program, or computer program product, may be included in a CAM-software product, i.e. a software for computer-aided manufacturing. Said computer program may be in the form of a computer readable medium such as a USB-stick, a CD-ROM or a data stream.

Further advantageous features of the method according to the present invention will appear from the description following below.

### BRIEF DESCRIPTION OF THE DRAWINGS

With reference to the appended drawings, a specific description of embodiments of the invention cited as examples follows below. In the drawings:
- Fig 1: is a perspective view of a milling tool suitable for use in a method according to an embodiment of the present invention,
- Fig 2: is a lateral view of the milling tool of Fig 1,
- Fig 3: is a front view of the milling tool of Fig 1,
- Figs 4a and 4b: are exploded perspective views from different directions of a part of the milling tool of Fig 1,
- Fig 5: is a rear view of a cutting part included in the milling tool of Fig 1,
- Fig 6: is a lateral view of the cutting part of Fig 5,
- Fig 7: is a perspective view of the cutting part of Fig 5,
- Fig 8: is a planar view of the cutting part of Fig 5,
- Figs 9a and 9b: are perspective views from different directions of the milling tool of Fig 1 and an internally toothed workpiece, as seen with the milling tool in a position for chamfering flank edges at a first end face of the workpiece,
- Fig 9c: is a front view of the milling tool and workpiece of Figs 9a and 9b,
- Fig 10a: is a perspective view of the milling tool and workpiece of Figs 9a-9c, as seen with the milling tool in a position for chamfering flank edges at an opposite second end face of the workpiece according to a first variant,
- Fig 10b: is a front view of the milling tool and workpiece of Fig 10a,
- Figs 11a and 11b: are perspective views from different directions of the milling tool and workpiece of Figs 9a-9c, as seen with the milling tool in a position for chamfering flank edges at the second end face of the workpiece according to an alternative second variant,
- Fig 11c: is a front view of the milling tool and workpiece of Figs 11a and 11b,
- Fig 12: is a perspective view in larger scale of a part of the internally toothed workpiece of Figs 9-11,
- Fig 13: is a font view in larger scale of a part of the internally toothed workpiece of in Figs 9-11,
- Fig 14a: is a partly cut lateral view of the milling tool and a part of the workpiece of Figs 9-11, as seen with the milling tool in the position illustrated in Figs 9a-9c,
- Fig 14b: is a partly cut lateral view of the milling tool and a part of the workpiece of Figs 9-11, as seen with the milling tool in the position illustrated in Figs 10a and 10b,
- Fig 15a-15e: are illustrations of different stages in a process of chamfering flank edges on an internally toothed workpiece by means of the milling tool of Fig 1,
- Figs 16a and 16b: are perspective views from different directions of the milling tool of Fig 1 and an externally toothed workpiece, as seen with the milling tool in a position for chamfering flank edges at a first end face of the workpiece,
- Fig 16c: is a front view of the milling tool and workpiece of Figs 16a and 16b,
- Fig 17a: is a perspective view of the milling tool and workpiece of Figs 16a-16c, as seen with the milling tool in a position for chamfering flank edges at an opposite second end face of the workpiece,
- Fig 17b: is a front view of the milling tool and workpiece of Fig 17a, and
- Fig 18: is a lateral view of a milling tool according to an alternative variant.

### DETAILED DESCRIPTION OF EMBODIMENTS OF THE INVENTION

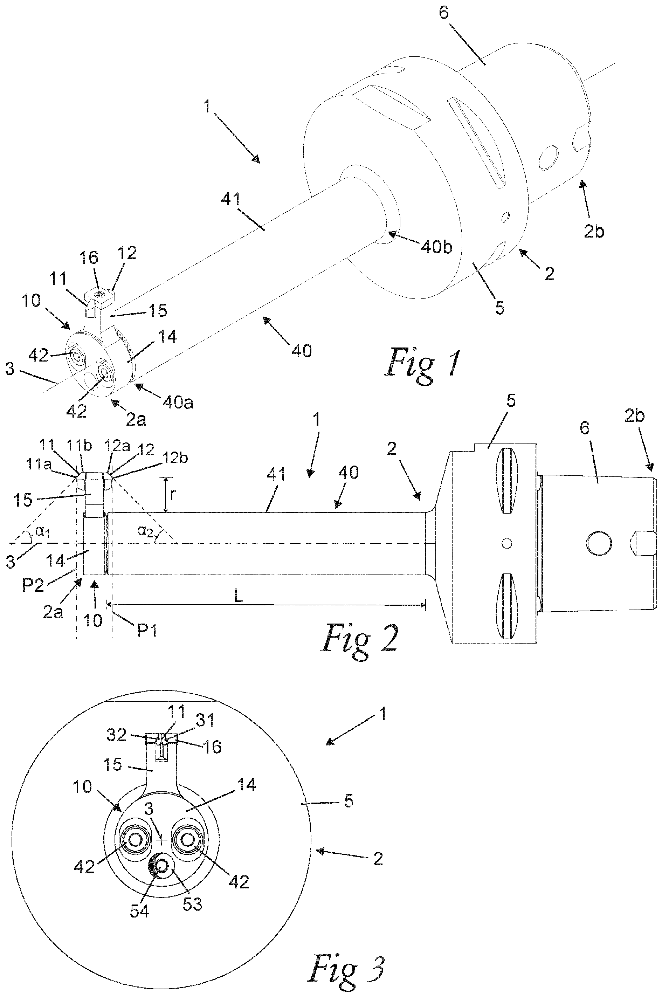

An embodiment of a milling tool 1 suitable for use in a method according to the present invention is illustrated in Figs 1-8. The milling tool 1 is intended to be used for chamfering flank edges of internal or external teeth on a cylindrical toothed workpiece at opposite end faces of the workpiece. The milling tool 1 comprises an elongated tool body 2, which is configured to be rotated about an axis of rotation 3. The tool body 2 has a front end 2a and an opposite rear end 2b. In the illustrated embodiment, a collar 5 is provided on the tool body 2. A rear part 6 of the tool body 2 located between the collar 5 and the rear end 2b forms a connection member, through which the tool body 2 is mountable, directly or via an intermediate tool holder, to a rotating spindle or the similar of a machine, for instance a milling machine. In the embodiments illustrated in the figures, the rear part 6 is Coromant Capto^{®} of the size C8. Other Coromant Capto^{®} sizes that may be used are sizes C3-C10. The rear part 6 may be any other connection member suitable for such a purpose, such as HSK.

The tool body 2 comprises a cutting part 10, which is located at a distance from the rear part 6 and which is provided with cutting edges 11, 12. The tool body 2 further comprises an elongated shank part 40, which carries the cutting part 10 and extends from the cutting part 10 towards the rear part 6. The shank part 40 has a front end 40a facing the cutting part 10 and an opposite rear end 40b facing the collar 5 and the rear part 6. The cutting part 10 is mounted to the shank part 40 at the front end 40a thereof. The shank part 40 has a peripheral surface 41, which extends around the shank part 40 between the rear end 40b and the front end 40a thereof. The shank part 40 has a longitudinal central axis that coincides with an axis of rotation 3 of the tool body 2.

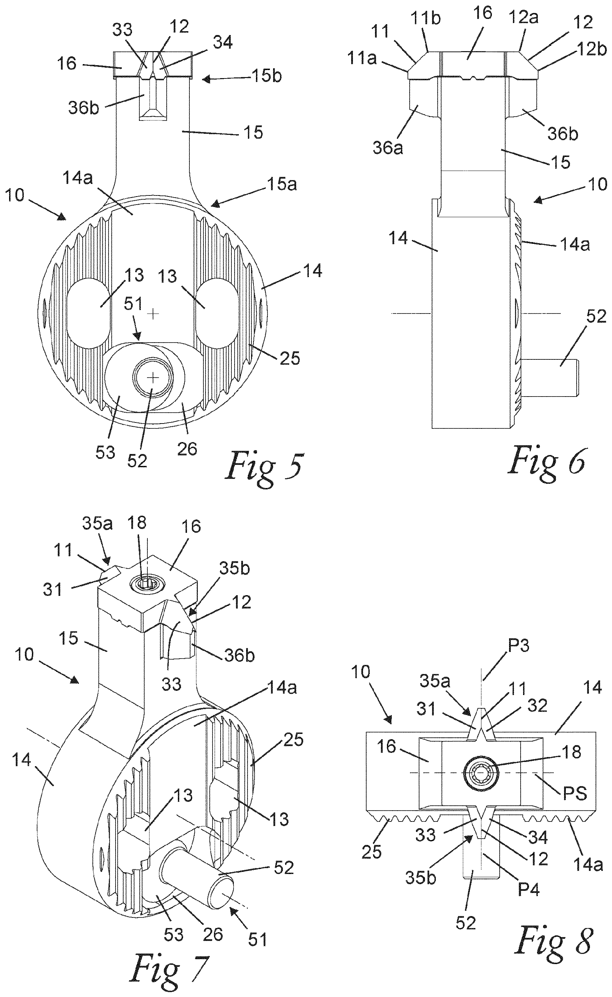

The cutting part 10 is provided with one pair of cutting edges consisting of a first cutting edge 11, which faces away from the rear part 6 of the tool body, and a second cutting edge 12, which faces the rear part 6 of the tool body and which is located closer to the rear part 6 than the first cutting edge 11. Thus, the first cutting edge 11 is more distant from the rear part 6 of the tool body than the second cutting edge 12. Each one of the first and second cutting edges 11, 12 has a front end 11a, 12a and an opposite rear end 11b, 12b. The rear end 11b of the first cutting edge 11 is located closer to the rear part 6 of the tool body than the front end 11a of the first cutting edge and the rear end 12b of the second cutting edge 12 is located closer to the rear part 6 of the tool body than the front end 12a of the second cutting edge. The front end 11a of the first cutting edge 11 is located closer to the axis of rotation 3 than the rear end 11b of the first cutting edge and the distance between the first cutting edge 11 and the axis of rotation 3 is gradually increasing as seen in a direction along the first cutting edge 11 from the front end 11a thereof to the rear end 11b thereof, as illustrated in Figs 2 and 6. The rear end 12b of the second cutting edge 12 is located closer to the axis of rotation 3 than the front end 12a of the second cutting edge and the distance between the second cutting edge 12 and the axis of rotation 3 is gradually increasing as seen in a direction along the second cutting edge 12 from the rear end 12b thereof to the front end 12a thereof. Furthermore, the rear end 12b of the second cutting edge 12 is located at a longer distance from the axis of rotation 3 than the radially outermost part of the peripheral surface 41 of the shank part 40.

The cutting part 10 could also be provided with two or more pairs of cutting edges 11, 12 of the type described above.

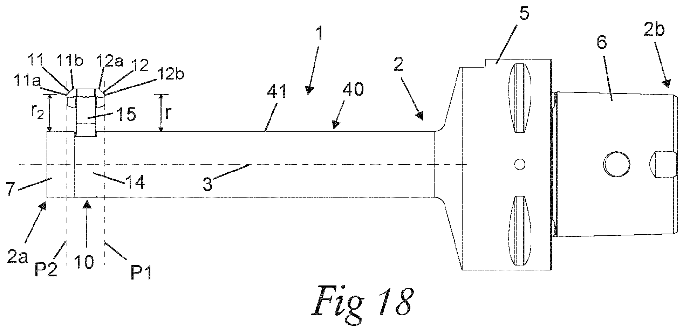

The cutting part 10 has an extension in the axial direction of the tool body 2 limited to an area between a first plane P1 (see Fig 2) that extends perpendicularly to the axis of rotation 3 and intersects the rear end 12b of the second cutting edge 12 and a second plane P2 that extends perpendicularly to the axis of rotation 3 and intersects the front end 11a of the first cutting edge 11. In the embodiment illustrated in Figs 1-8, the tool body 2 does not have any part that extends axially beyond the cutting part 10. Thus, in this case, the cutting part 10 constitutes the axially foremost part of the tool body 2, i.e. the part of the tool body 2 that is most distant from the rear part 6. The tool body 2 may as an alternative also comprise a front part 7 that is connected to the cutting part 10 and projects from the cutting part on the side thereof facing away from the rear part 6, as illustrated in Fig 18. In this case, the front end 11a of the first cutting edge 11 is to be located at a longer distance from the axis of rotation 3 than a radially outermost part of a peripheral surface of said front part 7.

The radial distance r between the rear end 12b of the second cutting edge 12 and the radially outermost part of the peripheral surface 41 of the shank part 40 is preferably 2-40 mm, more preferably 6-30 mm. In the embodiment illustrated in Fig 18, radial distance r₂ between the front end 11a of the first cutting edge 11 and the radially outermost part of the peripheral surface of the front part 7 is preferably 2-40 mm, more preferably 6-30 mm.

In the illustrated embodiments, the shank part 40 is rod-shaped and has the form of a right circular cylinder. However, the shank part 40 may also have any other suitable shape. The shank part 40 has a length L of 25-500 mm, preferably 50-200 mm, more preferably 100-150 mm.

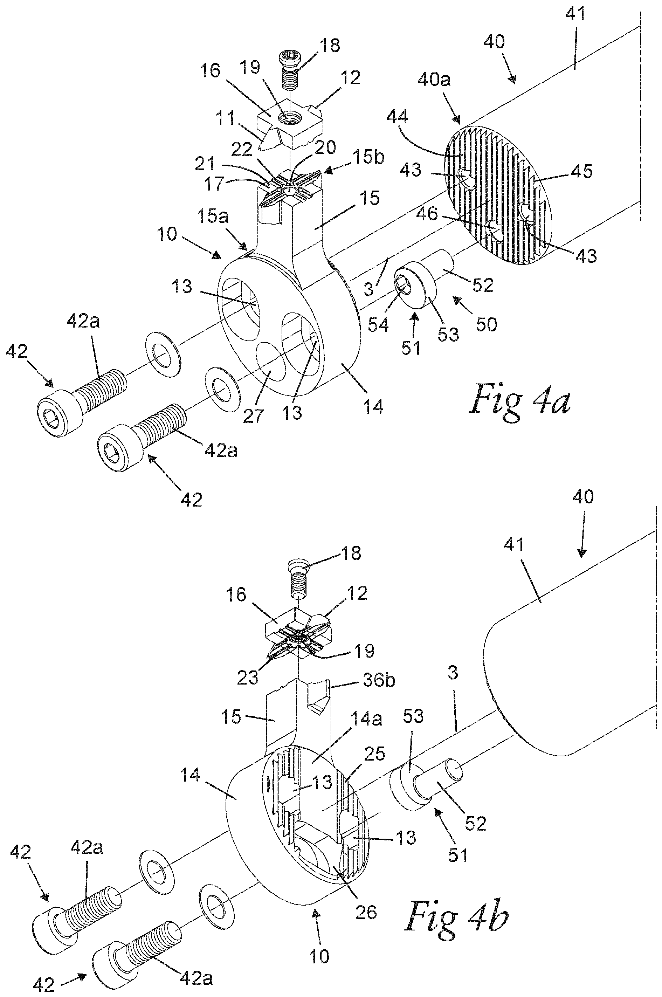

The cutting part 10 may be permanently fixed to the shank part 40. However, in the embodiment illustrated in Figs 1-8, the cutting part 10 is detachably mounted to the shank part 40 at the front end 40a thereof by means of fastening elements 42 in the form of two screws, which extend through a respective through hole 13 in the cutting part 10 and are engaged in a respective threaded hole 43 (see Fig 4a) provided in a front end face 44 of the shank part 40.

In the illustrated embodiments, the cutting part 10 comprises a base 14, through which the cutting part 10 is mounted to the shank part 40, and holder arm 15, which is fixed to the base 14 and projects from the base 14 in radial direction in relation to the axis of rotation 3 beyond the radially outermost part of the peripheral surface 41 of the shank part 40. The holder arm 15 has an inner end 15a facing the axis of rotation 3 and an opposite outer end 15b. The holder arm 15 is fixed to the base 14 at its inner end 15a and the first and second cutting edges 11, 12 are arranged on the holder arm 15 at the outer end 15b thereof. The first and second cutting edges 11, 12 form part of a cutting insert 16 that is releasably mounted to an insert seat 17 provided at the outer end 15b of the holder arm 15. The illustrated cutting insert 16 is releasably fixed to the insert seat 17 by means of a fastening element 18 in the form of a screw, which extends through a through hole 19 in the cutting insert 16 and is engaged in a threaded hole 20 (see Fig 4a) in a support surface 21 in the insert seat 17. The support surface 21 is with advantage provided with splines 22 or the similar configured for positive mechanical engagement with corresponding splines 23 on an underside of the cutting insert 16 in order to ensure a correct positioning of the cutting insert 16 in the insert seat 17 and prevent the cutting insert 16 from moving in relation to the support surface 21 when properly mounted to the insert seat 17.

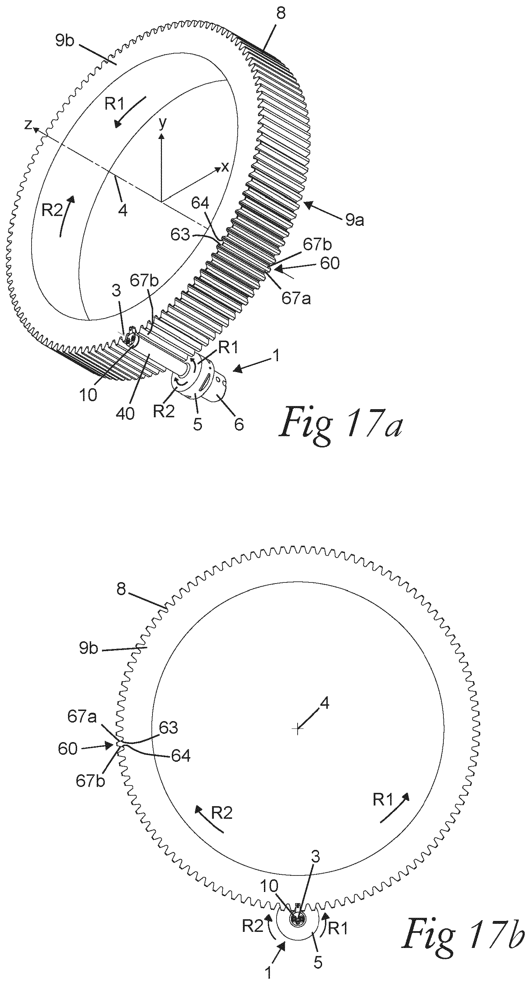

The base 14 and the shank part 40 are with advantage formed as separate components, wherein the base 14 may be detachably mounted the shank part 40. However, the base 14 and the shank part 40 may as an alternative be formed in one piece. In a corresponding manner, the front part 7 and the base 14 included in the milling tool 1 illustrated in Fig 17 may be formed in one piece or formed as separate components that are mounted to each other.

In the embodiment illustrated in Figs 1-8, the base 14 is slidably mounted to the shank part 40 at the front end 40a thereof so as to be linearly slidable in relation to the shank part 40 perpendicularly to the axis of rotation 3 and in the longitudinal direction of the holder arm 15, wherein the base 14 is lockable to the shank part 40 in different sliding positions in relation to the shank part 40 to thereby allow an adjustment of the radial distance between the first cutting edge 11 and the axis of rotation 3 and the radial distance between the second cutting edge 12 and the axis of rotation 3. Thus, by adjustment of the position of the base 14 in relation to the skank part 40, it will be possible to adjust the above-mentioned radial distance r between the rear end 12b of the second cutting edge 12 and the radially outermost part of the peripheral surface 41 of the shank part 40. In the illustrated example, a rear face 14a of the base 14 is provided with mutually parallel splines 25, which extend in parallel with a longitudinal axis of the holder arm 15 and which are in slidable engagement with corresponding splines 45 provided on the front end face 44 of the shank part 40 in order to allow the base 14 to slide in the desired direction in relation to the shank part 40 during the adjustment of the sliding position of the base 14 in relation to the shank part 40.

The milling tool 1 illustrated in Figs 1-8 comprises an adjustment mechanism 50, by means of which the sliding position of the base 14 in relation to the shank part 40 is adjustable. Thus, the exact positioning of the base 14 along the splines 45 on the front end face 44 of the shank part 40 is adjustable by means of the adjustment mechanism 50. In the illustrated embodiment, the adjustment mechanism 50 comprises an adjustment element 51, which is configured to act between the base 14 and the shank part 40. This adjustment element 51 comprises a pin 52, which is rotatably received in a hole 46 provided in the front end face 44 of the shank part 40, and a head 53, which is fixed to the pin 52 and rotatably received in a recess 26 provided in the rear face 14a of the base 14. The axis of rotation of the pin 52 is parallel to but offset from the axis of rotation of the head 53 such that a rotation of the head 53 in the recess 26 will effect a sliding movement of the base 14 in the longitudinal direction of the splines 25, 45. A socket 54 designed for releasable engagement with a torque tool (not shown) is provided in a front face of the head 53 so as to allow a torque tool to be connected to the head 53 when the head 53 is to be rotated in order to make it move the base 14 in the longitudinal direction of the splines 25, 45. The socket 54 is accessible through a hole 27 in the base 14. The above-mentioned through holes 13 for the fastening elements 42 are provided in the base 14. Each one of these trough holes 13 has an elongated cross-sectional shape with a longer axis extending substantially in the longitudinal direction of the splines 25 to thereby allow the base 14 to move perpendicularly to the shafts 42a of the fastening elements 42 in the longitudinal direction of the splines 45 on the front end face 44 of the shank part 40. The base 14 is lockable to the shank part 40 in a desired sliding position in relation to the shank part 40 by tightening of the fastening elements 42. The adjustment mechanism 50 may of course also be designed in any other suitable manner.

In the embodiment illustrated in Figs 1-8, the first cutting edge 11 extends substantially rectilinearly in a third plane P3 (see Fig 8) that contains the axis of rotation 3 and the second cutting edge 12 extends substantially rectilinearly in a fourth plane P4 that contains the axis of rotation 3. The fourth plane P4 preferably coincides with the third plane P3, as illustrated in Fig 8, but the third and fourth planes P3, P4 could as an alternative be angularly offset from each other with respect to the axis of rotation 3 of the tool body 2. The first cutting edge 11 has such an inclination in the third plane P3 that an extension of the first cutting edge 11 forms a first angle α₁ (see Fig 2) with the axis of rotation 3, and the second cutting edge 12 has such an inclination in the fourth plane P4 that an extension of the second cutting edge 12 forms a second angle α₂ with the axis of rotation. The first and second angles α₁, α₂ may differ from each other but are preferably equal or at least substantially equal. The first angle α₁ and the second angle α₂ are larger than or equal to 20° and smaller than 90°, preferably 30-80°. In the illustrated embodiment, the first angle α₁ and the second angle α₂ are both approximately 45°.

In the embodiment illustrated in Figs 1-8, the first cutting edge 11 is formed at an intersection between a first surface 31 and a second surface 32 on the cutting insert 16 and the second cutting edge 12 is formed at an intersection between a third surface 33 and a fourth surface 34 on the cutting insert 16, wherein the first and second surfaces 31, 32 are mirror symmetrical to each other with respect to the third plane P3 and wherein the third and fourth surfaces 33, 34 are mirror symmetrical to each other with respect to the fourth plane P4. Furthermore, the first cutting edge 11 and the second cutting edge 12 are here mirror symmetrical to each other with respect to a plane of symmetry PS (see Fig 8) that extends halfway between the first and second cutting edges 11, 12 perpendicularly to the axis of rotation 3 of the tool body 2. The first and second surfaces 31, 32 are inclined in relation to each other and diverge from each other in a direction from the first cutting edge 11 towards the axis or rotation 3, wherein the first and second surfaces 31, 32 form a first nose-shaped projection 35a on the cutting insert 16. In the corresponding manner, the third and fourth surfaces 33, 34 are inclined in relation to each other and diverge from each other in a direction from the second cutting edge 12 towards the axis or rotation 3, wherein the third and fourth surfaces 33, 34 form a second nose-shaped projection 35b on the cutting insert 16. A first projection 36a in provided on a first side of the holder arm 15 at the outer end 15b thereof in order to form a support for the first nose-shaped projection 35a on the cutting insert 16 and a second projection 36b in provided on an opposite second side of the holder arm 15 at the outer end 15b thereof in order to form a support for the second nose-shaped projection 35b on the cutting insert 16.

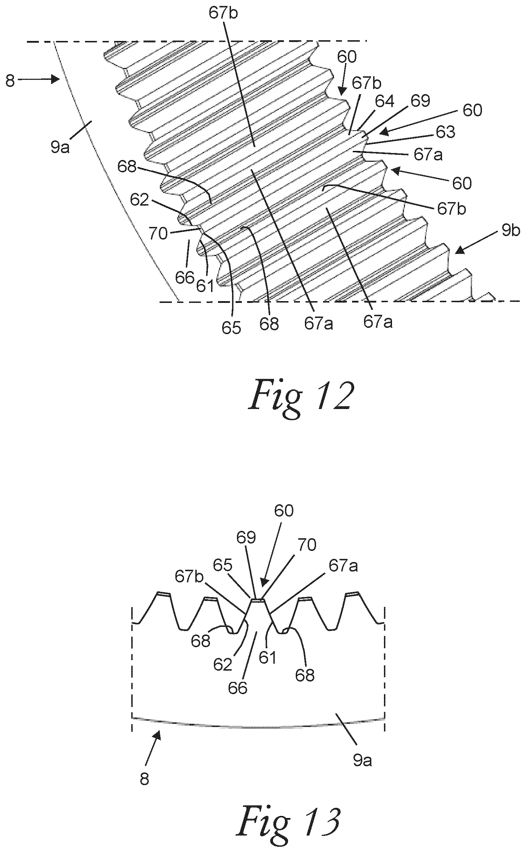

As mentioned above, the milling tool 1 is intended to be used for chamfering flank edges 61-64 (see Figs 12 and 13) of internal or external teeth 60 on a cylindrical toothed workpiece 8 at a first end face 9a of the workpiece and at an opposite second end face 9b of the workpiece. Each tooth 60 on the workpiece 8 has a tooth tip 65, a tooth root 66, a first tooth flank surface 67a extending between the tooth tip 65 and the tooth root 66 on a first side of the tooth and a second tooth flank surface 67b extending between the tooth tip 65 and the tooth root 66 on an opposite second side of the tooth. A first flank edge 61 is formed at an intersection between the first tooth flank surface 67a and the first end face 9a of the workpiece 8, a second flank edge 62 is formed at an intersection between the second tooth flank surface 67b and the first end face 9a of the workpiece 8, a third flank edge 63 is formed at an intersection between the first tooth flank surface 67a and the second end face 9b of the workpiece 8 and a fourth flank edge 64 is formed at an intersection between the second tooth flank surface 67b and the second end face 9b of the workpiece 8. A bottom land 68 is provided between the tooth roots 66 of every two adjacent teeth 60 and a top land 69 is provided at the tooth tip 65 of each tooth 60.

The edges 70 at the interfaces between the top land 69 of each tooth 60 on the workpiece 8 and the respective end face 9a, 9b of the workpiece are normally chamfered in a separate machining operation before the chamfering of the flank edges 61-64 is carried out by means of the milling tool 1.

During the performance of a chamfering operation with the use of the milling tool 1 described above or any other milling tool of suitable type, the workpiece 8 is attached to a rotatable workpiece holder (not shown) of a machine and rotatable by the machine about a central axis 4 of the workpiece 8, wherein the milling tool 1 is attached to a rotatable tool holder (not shown) of the machine and rotatable by the machine about the axis of rotation 3 of the tool body 2 and moveable by the machine in relation to the workpiece 8 in the axial direction z of the workpiece 8 and in different directions in a plane x, y perpendicular to the central axis 4 of the workpiece 8 with the axis of rotation 3 of the tool body 2 in parallel with the central axis 4 of the workpiece 8. The speed of rotation of the workpiece 8, the speed of rotation of the milling tool 1 and the movements of the milling tool 1 in relation to the workpiece 8 are controlled in a program-controlled manner by means of an electronic control device (not shown).

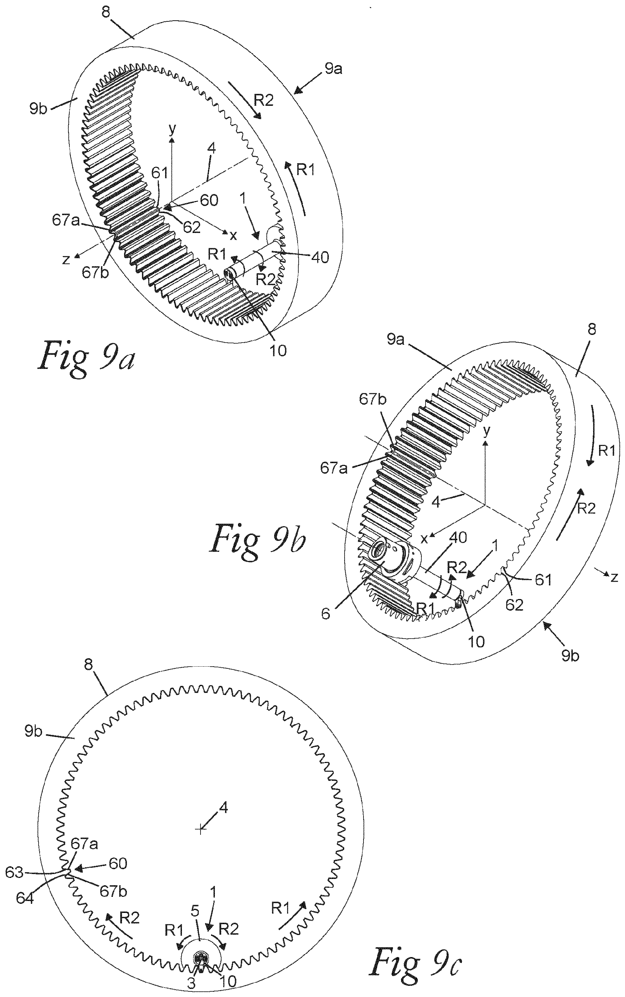

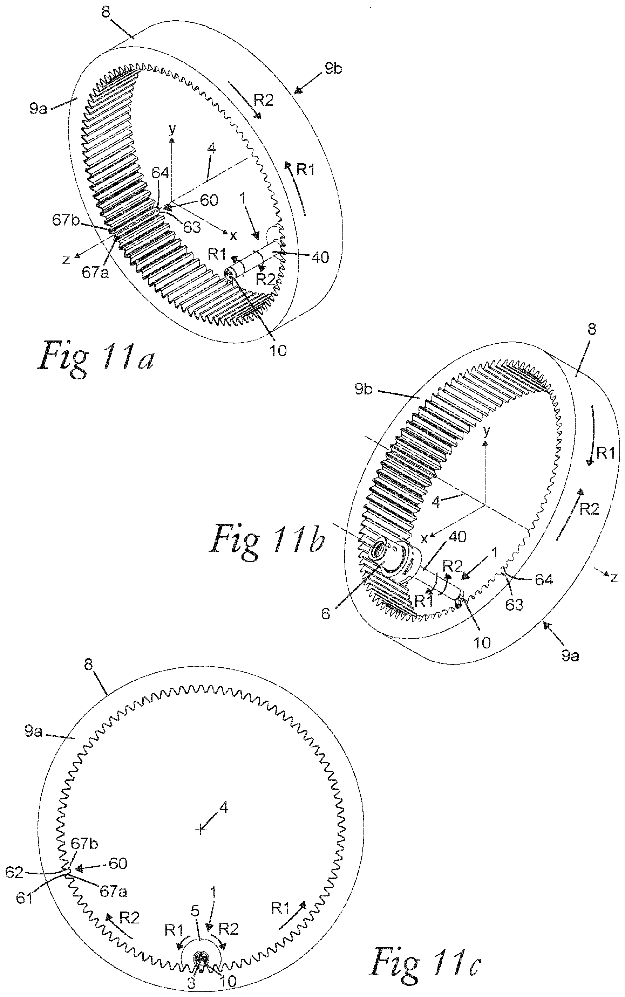

The workpiece holder and the tool holder of the machine are normally located opposite to each other with the tool holder facing the workpiece holder. In the examples illustrated in Figs 9-10 and Figs 16-17, the end face of the workpiece 8 referred to as the first end face 9a is facing the tool holder of the machine, wherein the opposite second end face 9b of the workpiece 8 is facing the workpiece holder of the machine. In the example illustrated in Figs 11a-11c, the workpiece 8 has been positioned in the opposite direction in the machine with the first end face 9a of the workpiece 8 facing the workpiece holder of the machine and with the second end face 9b of the workpiece 8 facing the tool holder of the machine.

When mounted to the workpiece holder of the machine, the workpiece 8 is rotatable by the machine about its central axis 4 in a first direction of rotation R1 and in an opposite second direction of rotation R2. When the workpiece 8 is positioned with the second end face 9b of the workpiece 8 facing the workpiece holder (as illustrated in Figs 9-10 and 16-17), the workpiece 8 will be rotated with the second tooth flank surfaces 67b of the teeth 60 on the workpiece as leading tooth flank surfaces and with the first tooth flank surfaces 67a of the teeth 60 on the workpiece as trailing tooth flank surfaces when rotated in the first direction of rotation R1, and with the first tooth flank surfaces 67a of the teeth 60 on the workpiece as leading tooth flank surfaces and with the second tooth flank surfaces 67b of the teeth 60 on the workpiece as trailing tooth flank surfaces when rotated in the second direction of rotation R2. When the workpiece 8 is positioned in the opposite direction with the first end face 9a of the workpiece 8 facing the workpiece holder (as illustrated in Figs 11a-11c), the workpiece 8 will be rotated with the first tooth flank surfaces 67a of the teeth 60 on the workpiece as leading tooth flank surfaces and with the second tooth flank surfaces 67b of the teeth 60 on the workpiece as trailing tooth flank surfaces when rotated in the first direction of rotation R1, and with the second tooth flank surfaces 67b of the teeth 60 on the workpiece as leading tooth flank surfaces and with the first tooth flank surfaces 67a of the teeth 60 on the workpiece as trailing tooth flank surfaces when rotated in the second direction of rotation R2.

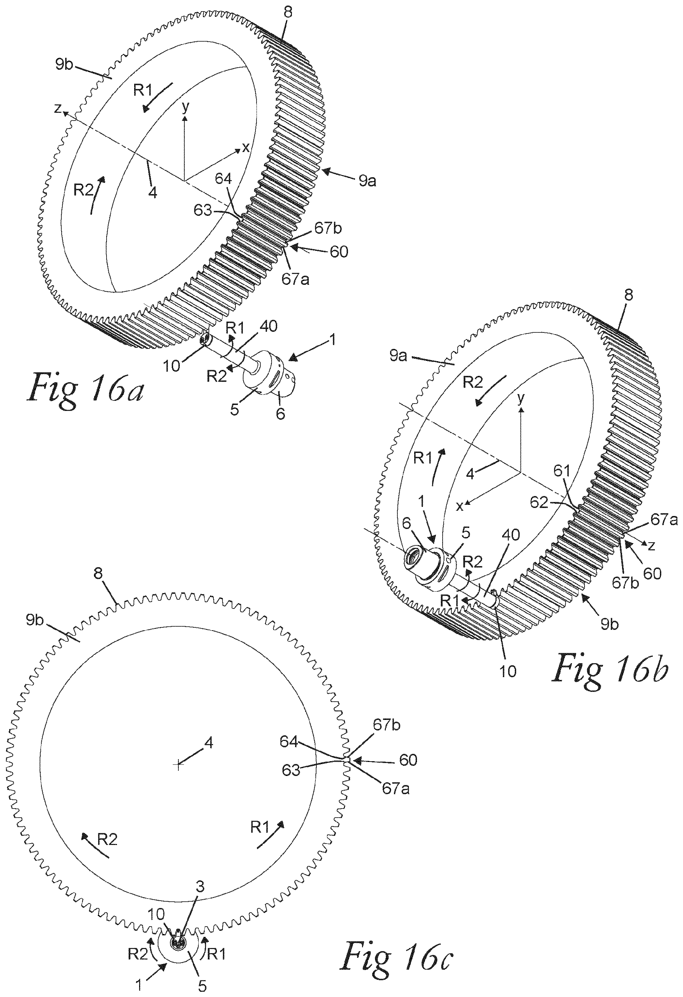

In order to perform a chamfering of the first and second flank edges 61, 62 of the teeth 60 on the workpiece 8 in the desired machining direction, the following steps are performed:
a) the workpiece 8 is rotated about its central axis 4 in a direction of rotation R1 with the second tooth flank surfaces 67b as leading tooth flank surfaces and with the first tooth flank surfaces 67a as trailing tooth flank surfaces and the milling tool 1 is simultaneously rotated about the axis of rotation 3 of the tool body 2, with a predefined relationship between the speed of rotation of the milling tool 1 and the speed of rotation of the workpiece 8, in the same direction of rotation R1 as the workpiece 8 when said teeth 60 are internal teeth on the workpiece 8 (see Figs 9a-9c) or in an opposite direction of rotation R2 when said teeth 60 are external teeth on the workpiece 8 (see Figs 16a-16c), while keeping the axis of rotation 3 of the tool body 2 in parallel with the central axis 4 of the workpiece 8 and moving the milling tool 1 along a predefined path in relation to the workpiece 8 with a cutting edge 11 of the milling tool 1 facing the first end face 9a of the workpiece 8 such that this cutting edge chamfers the first flank edges 61 of said teeth 60 in a machining direction from the tooth root 66 to the tooth tip 65 of each tooth 60; and
b) the workpiece 8 is rotated about its central axis 4 in a direction of rotation R2 with the first tooth flank surfaces 67a as leading tooth flank surfaces and with the second tooth flank surfaces 67b as trailing tooth flank surfaces and the milling tool 1 is simultaneously rotated about the axis of rotation 3 of the tool body 2, with a predefined relationship between the speed of rotation of the milling tool 1 and the speed of rotation of the workpiece 8, in the same direction of rotation R2 as the workpiece 8 when said teeth 60 are internal teeth on the workpiece 8 or in an opposite direction of rotation R1 when said teeth 60 are external teeth on the workpiece 8, while keeping the axis of rotation 3 of the tool body 2 in parallel with the central axis 4 of the workpiece 8 and moving the milling tool 1 along a predefined path in relation to the workpiece 8 with a cutting edge 11 of the milling tool 1 facing the first end face 9a of the workpiece 8 such that this cutting edge chamfers the second flank edges 62 of said teeth 60 in a machining direction from the tooth root 66 to the tooth tip 65 of each tooth 60.

In the illustrated examples, the chamfering of the first flank edges 61 in step a and the chamfering of the second flank edges 62 in step b are performed by means of one and the same milling tool 1. However, it would as an alternative be possible to perform the chamfering of the first flank edges 61 in step a by means of a first milling tool with a cutting edge adapted for milling only in one direction of rotation and the chamfering of the second flank edges 62 in step b by means of a second milling tool with a cutting edge adapted for milling only in the opposite direction of rotation.

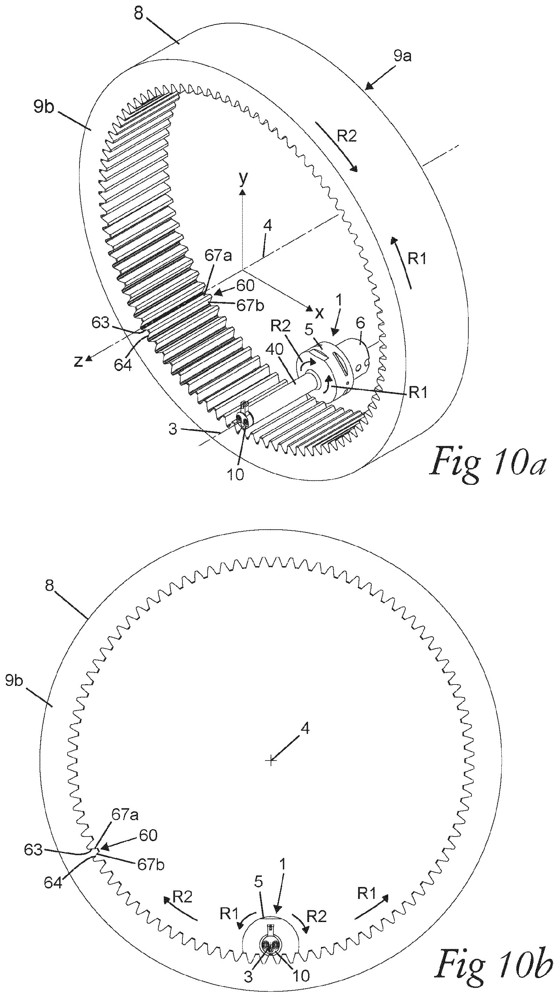

In order to perform a chamfering also of the third and fourth flank edges 63, 64 of the teeth 60 on the workpiece 8 in the desired machining direction, the following additional steps are performed:
c) the workpiece 8 is rotated about its central axis 4 in a direction of rotation (R1 in Figs 10a, 10b, 17a and 17b and R2 in Figs 11a-11c) with the second tooth flank surfaces 67b as leading tooth flank surfaces and with the first tooth flank surfaces 67a as trailing tooth flank surfaces and the milling tool 1 is simultaneously rotated about the axis of rotation 3 of the tool body 2, with a predefined relationship between the speed of rotation of the milling tool 1 and the speed of rotation of the workpiece 8, in the same direction of rotation as the workpiece 8 when said teeth 60 are internal teeth on the workpiece 8 (see Figs 10a and 10b and Figs 11a-11c) or in an opposite direction of rotation when said teeth 60 are external teeth on the workpiece 8 (see Figs 17a and 17b), while keeping the axis of rotation 3 of the tool body 2 in parallel with the central axis 4 of the workpiece 8 and moving the milling tool 1 along a predefined path in relation to the workpiece 8 with an active cutting edge of the milling tool 1 facing the second end face 9b of the workpiece 8 such that this cutting edge chamfers the third flank edges 63 of said teeth 60 in a machining direction from the tooth root 66 to the tooth tip 65 of each tooth 60; and
d) the workpiece 8 is rotated about its central axis 4 in a direction of rotation (R2 in Figs 10a, 10b, 17a and 17b and R1 in Figs 11a-11c) with the first tooth flank surfaces 67a as leading tooth flank surfaces and with the second tooth flank surfaces 67b as trailing tooth flank surfaces and the milling tool 1 is simultaneously rotated about the axis of rotation 3 of the tool body 2, with a predefined relationship between the speed of rotation of the milling tool 1 and the speed of rotation of the workpiece 8, in the same direction of rotation as the workpiece 8 when said teeth 60 are internal teeth on the workpiece 8 or in an opposite direction of rotation when said teeth 60 are external teeth on the workpiece 8, while keeping the axis of rotation 3 of the tool body 2 in parallel with the central axis 4 of the workpiece 8 and moving the milling tool 1 along a predefined path in relation to the workpiece 8 with an active cutting edge of the milling tool 1 facing the second end face 9b of the workpiece 8 such that this cutting edge chamfers the fourth flank edges 64 of said teeth 60 in a machining direction from the tooth root 66 to the tooth tip 65 of each tooth 60.

The chamfering of the third and fourth flank edges 63, 64 in steps c and d is performed with the second cutting edge 12 of the milling tool 1 as active cutting edge in the examples illustrated in Figs 10a-10b and 17a-17b and with the first cutting edge 11 of the milling tool 1 as active cutting edge in the example illustrated in Figs 11a-11c. If the chamfering of the first and second flank edges 61, 62 in steps a and b and also the chamfering of the third and fourth flank edges 63, 64 in steps c and d are performed with the first cutting edge 11 as active cutting edge, the workpiece 8 has to be repositioned in the workpiece holder when steps a and b have been completed and before steps c and d are effected, such that the workpiece 8 is positioned with the first end face 9a facing forwards towards the milling tool 1 during the performance of steps a and b and with the opposite second end face 9b facing forwards towards the milling tool 1 during the performance of steps c and d. In this case, it would of course be possible to use a milling tool that is provided with a first cutting edge 11 of the type described above and that lacks a second cutting edge 12 and a shank part 40 of the types described above.

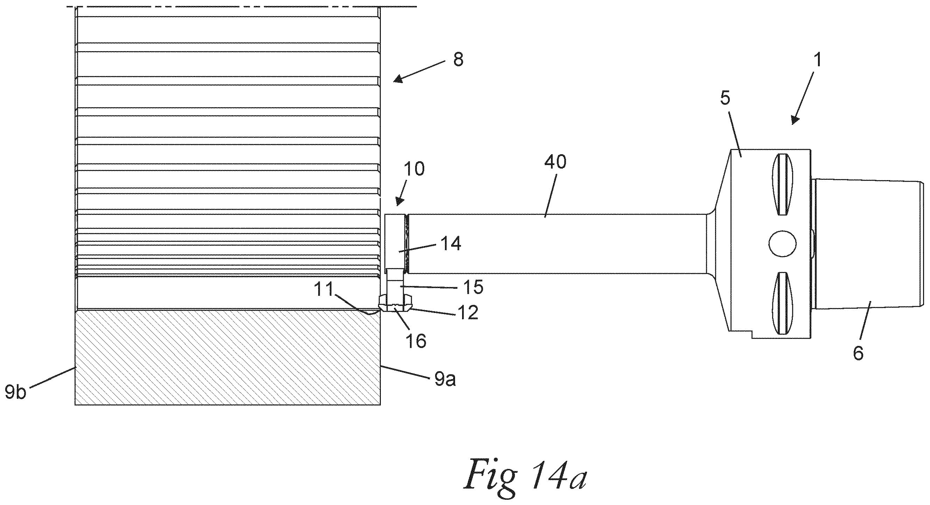

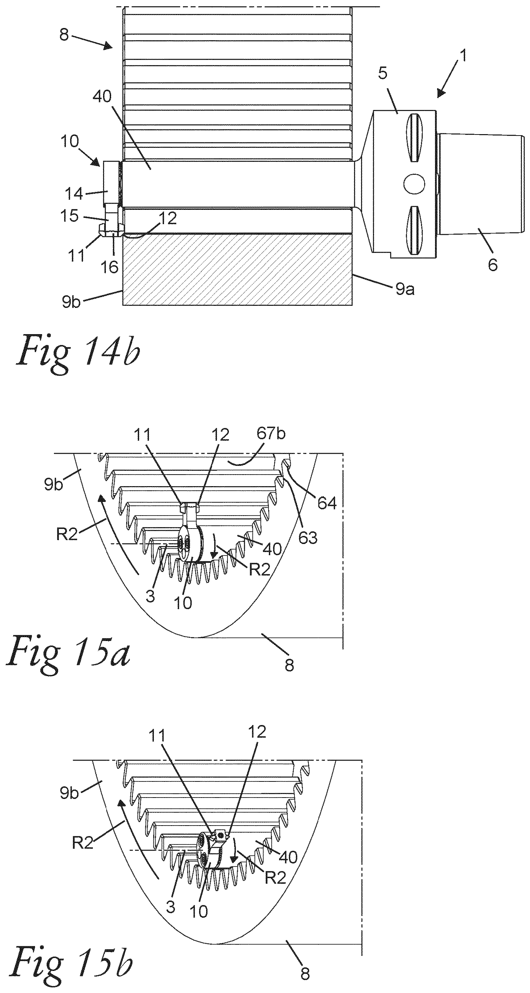

When the chamfering of the first and second flank edges 61, 62 in steps a and b is performed with the first cutting edge 11 of the milling tool 1 as active cutting edge and the chamfering of the third and fourth flank edges 63, 64 in steps c and d are performed with the second cutting edge 12 of the milling tool 1 as active cutting edge, the workpiece 8 may remain positioned with the first end face 9a facing forwards during the performance of all steps a-d. In this case, the milling tool 1 has to be moved axially in relation to the workpiece 8, when steps a and b have been completed and before steps c and d are effected, from the position illustrated in Fig 14a with the cutting part 10 of the tool body 2 adjacent to the first end face 9a of the workpiece 8 and with the first cutting edge 11 facing this first end face 9a to the position illustrated in Fig 14b with the cutting part 10 of the tool body 2 adjacent to the second end face 9b of the workpiece 8 and with the second cutting edge 12 facing this second end face 9b.

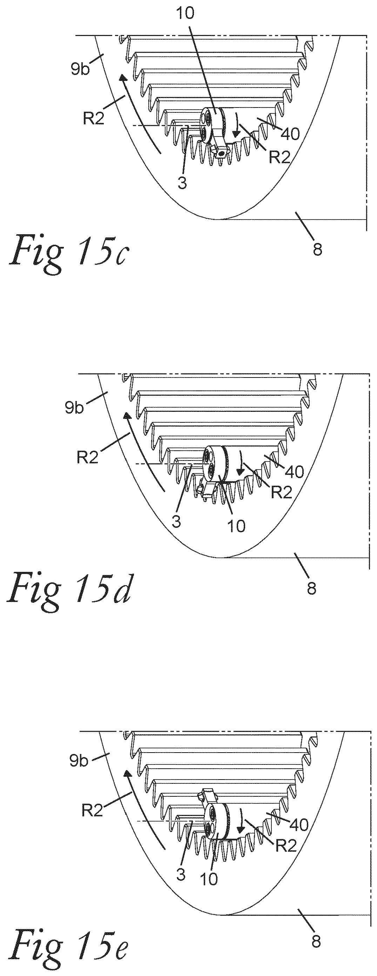

During the chamfering in each one of the above-mentioned steps a, b, c and d, a part of the active one of the first and second cutting edges 11, 12 is rotated into a gap between two adjacent teeth 60 and is thereafter moved together with this gap in the direction of rotation of the workpiece 8 during a part of a revolution of the workpiece 8, while coming into cutting engagement with at least one section of one of the flank edges that are located on opposite sides of the gap, before being rotated out of the gap, as illustrated in Figs 15a-15e. Upon continued rotation of the milling tool 1, a part of the active one of the first and second cutting edges 11, 12 is rotated into a new gap between two other adjacent teeth 60 on the workpiece 8, and so on. By gradually moving the milling tool 1 in relation to the workpiece 8, during continued rotation of the milling tool 1 and the workpiece 8, such that the distance between the axis or rotation 3 of the tool body 2 and the central axis 4 of the workpiece 8 is changed, the active cutting edge 11, 12 may be made to come into cutting engagement with different sections of each flank edge that is being chamfered at different stages of the chamfering process until these flank edges have been chamfered along their entire extension.

The movement of the milling tool 1 in relation to the workpiece 8 in each one of steps a and b may start by first moving the milling tool 1 in its axial direction to thereby move the active cutting edge, i.e. the first cutting edge 11 in the examples illustrated in Figs 9a-9c and 16a-16c, in a direction towards the first end face 9a of the workpiece 8 such that this cutting edge makes contact with the workpiece 8 when the milling tool 1 rotates. The milling tool 1 may thereafter remain in this axial position in relation to the workpiece 8 during the remaining phase of the step to thereby achieve a chamfer of substantially constant width all along each flank edge that is being chamfered. However, the milling tool 1 may also be moved in its axial direction in relation to the workpiece 8 during at least a part of the remaining phase of the step to thereby achieve a chamfer of varying width along each flank edge that is being chamfered.

In the corresponding manner, the movement of the milling tool 1 in relation to the workpiece 8 in each one of steps c and d may start by first moving the milling tool 1 in its axial direction to thereby move the active cutting edge, i.e. the first cutting edge 11 in the example illustrated in Figs 11a-11c and the second cutting edge 12 in the examples illustrated in Figs 10a-10b and 17a-17b, in a direction towards the second end face 9b of the workpiece 8 such that this cutting edge makes contact with the workpiece 8 when the milling tool 1 rotates. The milling tool 1 may thereafter remain in this axial position in relation to the workpiece 8 during the remaining phase of the step o thereby achieve a chamfer of substantially constant width all along each flank edge that is being chamfered. However, the milling tool 1 may also be moved in its axial direction in relation to the workpiece 8 during at least a part of the remaining phase of the step to thereby achieve a chamfer of varying width along each flank edge that is being chamfered.

The relationship between the speed of rotation of the milling tool 1 and the speed of rotation of the workpiece 8 is to be so adapted that a part of the active cutting edge 11, 12 has entered the gaps between all teeth 60 on the workpiece 8 after a certain number of revolutions of the workpiece 8. In order to allow the active cutting edge to move in the same direction as the gap between two adjacent teeth 60 on the workpiece 8 with a part of the cutting edge received in the gap in question, the milling tool 1 has to be rotated about the axis of rotation 3 of the tool body 2 in the same direction of rotation as the workpiece 8 when flank edges 61-64 of internal teeth 60 on a workpiece are being chamfered and in a direction of rotation that is opposite to the direction of rotation of the workpiece 8 when flank edges 61-64 of external teeth 60 on a workpiece are being chamfered.

## Claims

1. A method for chamfering flank edges of internal or external teeth (60) on a cylindrical toothed workpiece (8) at at least one of two opposite end faces (9a, 9b) of the workpiece (8), wherein each one of said teeth (60) has a tooth tip (65), a tooth root (66), a first tooth flank surface (67a) extending between the tooth tip (65) and the tooth root (66) on a first side of the tooth and a second tooth flank surface (67b) extending between the tooth tip (65) and the tooth root (66) on an opposite second side of the tooth, a first flank edge (61) being formed at an intersection between the first tooth flank surface (67a) and a first one (9a) of the two end faces of the workpiece (8), a second flank edge (62) being formed at an intersection between the second tooth flank surface (67b) and said first one (9a) of the two end faces of the workpiece (8), a third flank edge (63) being formed at an intersection between the first tooth flank surface (67a) and a second one (9b) of the two end faces of the workpiece (8) and a fourth flank edge (64) being formed at an intersection between the second tooth flank surface (67b) and said second one (9b) of the two end faces of the workpiece (8), wherein the workpiece (8) is rotatable by a machine about a central axis (4) of the workpiece (8) and wherein the chamfering is performed by means of one or more milling tools (1), each of which comprising a tool body (2) and one or more cutting edges (11, 12) provided on the tool body and each of which being rotatable by the machine about an axis of rotation (3) of the tool body (2) and moveable by the machine in relation to the workpiece (8) in an axial direction (z) of the workpiece (8) and in different directions in a plane (x, y) perpendicular to the central axis (4) of the workpiece (8) with the axis of rotation (3) of the tool body (2) in parallel with the central axis (4) of the workpiece (8), the method comprising the following steps:
a) rotating the workpiece (8) about its central axis (4) in a direction of rotation (R1) with the second tooth flank surfaces (67b) as leading tooth flank surfaces and with the first tooth flank surfaces (67a) as trailing tooth flank surfaces and simultaneously rotating one of said one or more milling tools (1) about the axis of rotation (3) of the tool body (2), with a predefined relationship between the speed of rotation of the milling tool (1) and the speed of rotation of the workpiece (8), in the same direction of rotation (R1) as the workpiece (8) when said teeth (60) are internal teeth on the workpiece (8) or in an opposite direction of rotation (R2) when said teeth (60) are external teeth on the workpiece (8), while keeping the axis of rotation (3) of the tool body (2) in parallel with the central axis (4) of the workpiece (8) and moving the milling tool (1) along a predefined path in relation to the workpiece (8) with at least one of said one or more cutting edges (11, 12) of the milling tool (1) facing the first one (9a) of the two end faces of the workpiece (8) such that this at least one cutting edge chamfers the first flank edges (61) of said teeth (60) in a machining direction from the tooth root (66) to the tooth tip (65) of each tooth (60); and
b) rotating the workpiece (8) about its central axis (4) in a direction of rotation (R2) with the first tooth flank surfaces (67a) as leading tooth flank surfaces and with the second tooth flank surfaces (67b) as trailing tooth flank surfaces and simultaneously rotating one of said one or more milling tools (1) about the axis of rotation (3) of the tool body (2), with a predefined relationship between the speed of rotation of the milling tool (1) and the speed of rotation of the workpiece (8), in the same direction of rotation (R2) as the workpiece (8) when said teeth (60) are internal teeth on the workpiece (8) or in an opposite direction of rotation (R1) when said teeth (60) are external teeth on the workpiece (8), while keeping the axis of rotation (3) of the tool body (2) in parallel with the central axis (4) of the workpiece (8) and moving the milling tool (1) along a predefined path in relation to the workpiece (8) with at least one of said one or more cutting edges (11, 12) of the milling tool (1) facing the first one (9a) of the two end faces of the workpiece (8) such that this at least one cutting edge chamfers the second flank edges (62) of said teeth (60) in a machining direction from the tooth root (66) to the tooth tip (65) of each tooth (60).

2. A method according to claim 1, wherein said predefined path for the movement of the milling tool (1) in relation to the workpiece (8) in step a comprises at least one part in which the milling tool (1) is moved in its axial direction to thereby move the cutting edge or cutting edges facing the first one (9a) of the two end faces of the workpiece (8) in a direction towards this end face (9a).

3. A method according to claim 1 or 2, wherein said predefined path for the movement of the milling tool (1) in relation to the workpiece (8) in step a comprises at least one part in which the distance between the axis or rotation (3) of the tool body (2) and the central axis (4) of the workpiece (8) is changed.

4. A method according to any of claims 1-3, wherein said predefined path for the movement of the milling tool (1) in relation to the workpiece (8) in step b comprises at least one part in which the milling tool (1) is moved in its axial direction to thereby move the cutting edge or cutting edges facing the first one (9a) of the two end faces of the workpiece (8) in a direction towards this end face (9a).

5. A method according to any of claims 1-4, wherein said predefined path for the movement of the milling tool (1) in relation to the workpiece (8) in step b comprises at least one part in which the distance between the axis or rotation (3) of the tool body (2) and the central axis (4) of the workpiece (8) is changed.

6. A method according to any of claims 1-5, wherein the method comprises the following additional steps:
c) rotating the workpiece (8) about its central axis (4) in a direction of rotation (R1) with the second tooth flank surfaces (67b) as leading tooth flank surfaces and with the first tooth flank surfaces (67a) as trailing tooth flank surfaces and simultaneously rotating one of said one or more milling tools (1) about the axis of rotation (3) of the tool body (2), with a predefined relationship between the speed of rotation of the milling tool (1) and the speed of rotation of the workpiece (8), in the same direction of rotation (R1) as the workpiece (8) when said teeth (60) are internal teeth on the workpiece (8) or in an opposite direction of rotation (R2) when said teeth (60) are external teeth on the workpiece (8), while keeping the axis of rotation (3) of the tool body (2) in parallel with the central axis (4) of the workpiece (8) and moving the milling tool (1) along a predefined path in relation to the workpiece (8) with at least one of said one or more cutting edges (11, 12) of the milling tool (1) facing the second one (9b) of the two end faces of the workpiece (8) such that this at least one cutting edge chamfers the third flank edges (63) of said teeth (60) in a machining direction from the tooth root (66) to the tooth tip (65) of each tooth (60); and
d) rotating the workpiece (8) about its central axis (4) in a direction of rotation (R2) with the first tooth flank surfaces (67a) as leading tooth flank surfaces and with the second tooth flank surfaces (67b) as trailing tooth flank surfaces and simultaneously rotating one of said one or more milling tools (1) about the axis of rotation (3) of the tool body (2), with a predefined relationship between the speed of rotation of the milling tool (1) and the speed of rotation of the workpiece (8), in the same direction of rotation (R2) as the workpiece (8) when said teeth (60) are internal teeth on the workpiece (8) or in an opposite direction of rotation (R1) when said teeth (60) are external teeth on the workpiece (8), while keeping the axis of rotation (3) of the tool body (2) in parallel with the central axis (4) of the workpiece (8) and moving the milling tool (1) along a predefined path in relation to the workpiece (8) with at least one of said one or more cutting edges (11, 12) of the milling tool (1) facing the second one (9b) of the two end faces of the workpiece (8) such that this at least one cutting edge chamfers the fourth flank edges (64) of said teeth (60) in a machining direction from the tooth root (66) to the tooth tip (65) of each tooth (60).

7. A method according to any of claims 1-6, wherein the workpiece (8) in step a is rotated in a first direction of rotation (R1) and in step b is rotated in a second direction of rotation (R2) opposite to the first direction of rotation (R1), while being maintained in the same orientation as in step a.

8. A method according to claim 7, wherein:
- the chamfering in step a and the chamfering in step b are performed by means of one and the same milling tool (1), which comprises at least one first cutting edge (11) that faces the first one (9a) of the two end faces of the workpiece (8) and chamfers the first and second flank edges (61, 62) of said teeth (60) in steps a and b, wherein the tool body (2) of this milling tool (1) at a rear end (2b) has a rear part (6) configured for attachment to the machine; and
- said at least one first cutting edge (11) extends substantially rectilinearly in a plane (P3) containing the axis of rotation (3) of the tool body (2) of the milling tool (1) and is formed at an intersection between a first surface (31) and a second surface (32) on a cutting insert (16) releasably mounted to an insert seat (17) provided in the tool body (2), wherein said first surface (31) functions as a rake face and said second surface (32) functions as a clearance face when the milling tool (1) is rotated in one direction of rotation about the axis of rotation (3) of the tool body (2) and chamfering is performed by this at least one first cutting edge (11), whereas said first surface (31) functions as a clearance face and said second surface (32) functions as a rake face when the milling tool (1) is rotated in another opposite direction of rotation about the axis of rotation (3) of the tool body (2) and chamfering is performed by this at least one first cutting edge (11).

9. A method according to claim 8, wherein said first surface (31) and said second surface (32) are mirror symmetrical to each other with respect to said plane (P3).

10. A method according to claim 8 or 9, wherein said at least one first cutting edge (11) has a front end (11a) and an opposite rear end (11b), the rear end (11b) of this at least one first cutting edge (11) being located closer to the rear part (6) of the tool body than the front end (11a) of this at least one first cutting edge (11), wherein the front end (11a) of this at least one first cutting edge (11) is located closer to the axis of rotation (3) of the tool body (2) than the rear end (11b) of this at least one first cutting edge (11) and the distance between this at least one first cutting edge (11) and the axis of rotation (3) of the tool body (2) is gradually increasing as seen in a direction along this at least one first cutting edge (11) from the front end (11a) thereof to the rear end (11b) thereof.

11. A method according to claim 10, wherein said at least one first cutting edge (11) has such an inclination in said plane (P3) that an extension of this first cutting edge (11) forms an angle (α₁) with the axis of rotation (3) of the tool body (2) larger than or equal to 20° and smaller than 90°, preferably 30-80°.

12. A method according to any of claims 8-11 in combination with claim 6, wherein:
- the chamfering in step c and the chamfering in step d are performed by means of the same milling tool (1) as the chamfering in steps a and b;
- the milling tool (1) comprises at least one second cutting edge (12) that faces the second one (9b) of the two end faces of the workpiece (8) and chamfers the third and fourth flank edges (63, 64) of said teeth (60) in steps c and d;
- said at least one first cutting edge (11) faces away from the rear part (6) of the tool body (2) and said at least one second cutting edge (12) faces the rear part (6) of the tool body (2) and is located closer to the rear part (6) than said at least one first cutting edge (11);
- said at least one second cutting edge (12) extends substantially rectilinearly in a plane (P4) containing the axis of rotation (3) of the tool body (2) and is formed at an intersection between a third surface (33) and a fourth surface (34) on said cutting insert (16), wherein said third surface (33) functions as a rake face and said fourth surface (34) functions as a clearance face when the milling tool (1) is rotated in one direction of rotation about the axis of rotation (3) of the tool body (2) and chamfering is performed by this at least one second cutting edge (12), whereas said third surface (33) functions as a clearance face and said fourth surface (34) functions as a rake face when the milling tool (1) is rotated in another opposite direction of rotation about the axis of rotation (3) of the tool body (2) and chamfering is performed by this at least one second cutting edge (12);
- the tool body (2) comprises a cutting part (10), which is located at a distance from the rear part (6), and an elongated shank part (40), which carries the cutting part (10) and extends from the cutting part (10) towards the rear part (6) and which has a front end (40a) facing the cutting part (10), an opposite rear end (40b) and a peripheral surface (41) extending around the shank part (40) between the rear end (40b) and the front end (40a) thereof, wherein the shank part (40) has a longitudinal central axis that coincides with the axis of rotation (3) of the tool body (2);
- said at least one second cutting edge (12) is located at a longer distance from the axis of rotation (3) of the tool body (2) than a radially outermost part of the peripheral surface (41) of the shank part (40); and
- the cutting part (10) constitutes an axially foremost part of the tool body (2) or the tool body (2) comprises a front part (7) that projects from the cutting part (10) on the side thereof facing away from the rear part (6) of the tool body (2), wherein said at least one first cutting edge (11) is located at a longer distance from the axis of rotation (3) of the tool body (2) than a radially outermost part of this front part (7).

13. A method according to claim 12, wherein said third surface (33) and said fourth surface (34) are mirror symmetrical to each other with respect to the plane (P4) in which said at least one second cutting edge (12) extends.

14. A method according to claim 12 or 13, wherein said at least one second cutting edge (12) has a front end (12a) and an opposite rear end (12b), the rear end (12b) of this at least one second cutting edge (12) being located closer to the rear part (6) of the tool body than the front end (12a) of this at least one second cutting edge (12), wherein the rear end (12b) of this at least one second cutting edge (12) is located closer to the axis of rotation (3) of the tool body (2) than the front end (12a) of this at least one second cutting edge (12) and the distance between this at least one second cutting edge (12) and the axis of rotation (3) of the tool body (2) is gradually increasing as seen in a direction along this at least one second cutting edge (12) from the rear end (12b) thereof to the front end (12a) thereof.

15. A method according to claim 14, wherein said at least one second cutting edge (12) has such an inclination in the plane (P4) in which it extends that an extension of this second cutting edge (12) forms an angle (α₂) with the axis of rotation (3) of the tool body (2) larger than or equal to 20° and smaller than 90°, preferably 30-80°.

16. A computer program having instructions which when executed by a CNC machine causes the CNC machine to perform the steps according to any of the claims 1-15.

## Patentansprüche

1. Verfahren zum Anfasen von Flankenkanten von Innen- oder Außenzähnen (60) an einem zylindrischen, verzahnten Werkstück (8) an wenigstens einer von zwei gegenüberliegenden Endflächen (9a, 9b) des Werkstücks (8), wobei jeder der Zähne (60) eine Zahnspitze (65), eine Zahnwurzel (66), eine erste Zahnflankenfläche (67a), die sich zwischen der Zahnspitze (65) und der Zahnwurzel (66) auf einer ersten Seite des Zahns erstreckt, und eine zweite Zahnflankenfläche (67b) aufweist, die sich zwischen der Zahnspitze (65) und der Zahnwurzel (66) auf einer gegenüberliegenden zweiten Seite des Zahns erstreckt, wobei eine erste Flankenkante (61) an einem Übergang zwischen der ersten Zahnflankenfläche (67a) und einer ersten (9a) der beiden Endflächen des Werkstücks (8) ausgebildet ist, eine zweite Flankenkante (62) an einem Übergang zwischen der zweiten Zahnflankenfläche (67b) und der ersten (9a) der beiden Endflächen des Werkstücks (8) ausgebildet ist, wobei eine dritte Flankenkante (63) an einem Übergang zwischen der ersten Zahnflankenfläche (67a) und einer zweiten (9b) der beiden Endflächen des Werkstücks (8) ausgebildet ist und eine vierte Flankenkante (64) an einem Übergang zwischen der zweiten Zahnflankenfläche (67b) und der zweiten (9b) der beiden Endflächen des Werkstücks (8) ausgebildet ist, wobei das Werkstück (8) durch eine Maschine um eine Mittelachse (4) des Werkstücks (8) rotierbar ist und wobei das Anfasen mittels eines oder mehrerer Fräswerkzeuge (1) erfolgt, wobei jedes ein Werkzeugkörper (2) und eine oder mehrere an dem Werkzeugkörper vorgesehene Schneidkanten (11, 12) aufweist und jedes durch die Maschine um eine Rotationsachse (3) des Werkzeugkörpers (2) rotierbar und durch die Maschine relativ zum Werkstück (8) in einer axialen Richtung (z) des Werkstücks (8) und in unterschiedlichen Richtungen in einer Ebene (x, y) senkrecht zur Mittelachse (4) des Werkstücks (8) mit der Rotationsachse (3) des Werkzeugkörpers (2) parallel zur Mittelachse (4) des Werkstücks (8) bewegbar ist, wobei das Verfahren folgende Schritte aufweist:
a) Rotieren des Werkstücks (8) um seine Mittelachse (4) in einer Rotationsrichtung (R1) mit den zweiten Zahnflanken (67b) als führenden Zahnflanken und mit den ersten Zahnflanken (67a) als nachlaufenden Zahnflanken und gleichzeitiges Rotieren eines der einen oder mehreren Fräswerkzeuge (1) um die Rotationsachse (3) des Werkzeugkörpers (2), mit einem vorbestimmten Verhältnis zwischen der Drehgeschwindigkeit des Fräswerkzeugs (1) und der Drehgeschwindigkeit des Werkstücks (8), in derselben Rotationsrichtung (R1) wie das Werkstück (8), wenn die Zähne (60) Innenzähne am Werkstück (8) sind, oder in einer entgegengesetzten Rotationsrichtung (R2), wenn die Zähne (60) Außenzähne am Werkstück (8) sind, während die Rotationsachse (3) des Werkzeugkörpers (2) parallel zur Mittelachse (4) des Werkstücks (8) gehalten wird und das Fräswerkzeug (1) entlang einer vorbestimmten Bahn in Bezug auf das Werkstück (8) bewegt wird, wobei wenigstens eine der einen oder mehreren Schneidkanten (11, 12) des Fräswerkzeugs (1) der ersten (9a) der beiden Endflächen des Werkstücks (8) zugewandt ist, so dass diese wenigstens eine Schneidkante die ersten Flankenkanten (61) der Zähne (60) in einer Bearbeitungsrichtung von der Zahnwurzel (66) zur Zahnspitze (65) jedes Zahnes (60) fasenförmig abschneidet. 8) der ersten der beiden Endflächen des Werkstücks (8) zugewandt ist, so dass diese wenigstens eine Schneidkante die ersten Flankenkante (61) der Zähne (60) in einer Bearbeitungsrichtung von der Zahnwurzel (66) zur Zahnspitze (65) jedes Zahnes (60) anfast, und
b) Rotieren des Werkstücks (8) um seine Mittelachse (4) in einer Rotationsrichtung (R2) mit den ersten Zahnflankenflächen (67a) als führenden Zahnflankenflächen und mit den zweiten Zahnflankenflächen (67b) als nachlaufenden Zahnflankenflächen und gleichzeitiges Rotieren eines der einen oder mehreren Fräswerkzeuge (1) um die Rotationsachse (3) des Werkzeugkörpers (2), mit einem vorbestimmten Verhältnis zwischen der Drehgeschwindigkeit des Fräswerkzeugs (1) und der Drehgeschwindigkeit des Werkstücks (8), in derselben Rotationsrichtung (R2) wie das Werkstück (8), wenn die Zähne (60) Innenzähne am Werkstück (8) sind, oder in einer entgegengesetzten Rotationsrichtung (R1), wenn die Zähne (60) Außenzähne am Werkstück (8) sind, während die Rotationsachse (3) des Werkzeugkörpers (2) parallel zur Mittelachse (4) des Werkstücks (8) gehalten wird und das Fräswerkzeug (1) entlang einer vorbestimmten Bahn in Bezug auf das Werkstück (8) bewegt wird, wobei wenigstens eine der einen oder mehreren Schneidkanten (11, 12) des Fräswerkzeugs (1) der ersten (9a) der beiden Endflächen des Werkstücks (8) zugewandt ist, so dass diese wenigstens eine Schneidkante die zweiten Flankenkanten (62) der Zähne (60) in einer Bearbeitungsrichtung von der Zahnwurzel (66) zur Zahnspitze (65) der Zähne (60) anfast.

2. Verfahren nach Anspruch 1, wobei die vorbestimmte Bahn des Fräswerkzeugs (1) relativ zum Werkstück (8) im Schritt a wenigstens einen Abschnitt aufweist, in dem das Fräswerkzeug (1) in seiner axialen Richtung bewegt wird, um dadurch die der ersten (9a) der beiden Endflächen des Werkstücks (8) zugewandte Schneidkante oder Schneidkanten in Richtung auf diese Endfläche (9a) zu bewegen.

3. Verfahren nach Anspruch 1 oder 2, wobei die vordefinierte Bahn des Fräswerkzeugs (1) relativ zum Werkstück (8) im Schritt a wenigstens einen Abschnitt aufweist, in dem der Abstand zwischen der Rotationsachse (3) des Werkzeugkörpers (2) und der Mittelachse (4) des Werkstücks (8) verändert wird.

4. Verfahren nach einem der Ansprüche 1 bis 3, wobei die vorbestimmte Bahn des Fräswerkzeugs (1) relativ zum Werkstück (8) im Schritt b wenigstens einen Abschnitt aufweist, in dem das Fräswerkzeug (1) in seiner axialen Richtung bewegt wird, um dadurch die der ersten (9a) der beiden Endflächen des Werkstücks (8) zugewandte Schneidkante oder Schneidkanten in Richtung auf diese Endfläche (9a) zu bewegen.

5. Verfahren nach einem der Ansprüche 1 bis 4, wobei die vorbestimmte Bahn des Fräswerkzeugs (1) relativ zum Werkstück (8) in Schritt b wenigstens einen Abschnitt aufweist, in dem der Abstand zwischen der Rotationsachse (3) des Werkzeugkörpers (2) und der Mittelachse (4) des Werkstücks (8) verändert wird.

6. Verfahren nach einem der Ansprüche 1 bis 5, wobei das Verfahren die folgenden zusätzlichen Schritte aufweist:
c) Rotieren des Werkstücks (8) um seine Mittelachse (4) in einer Rotationsrichtung (R1) mit den zweiten Zahnflankenflächen (67b) als führenden Zahnflankenflächen und mit den ersten Zahnflankenflächen (67a) als nachlaufenden Zahnflankenflächen und gleichzeitiges Rotieren eines der einen oder mehreren Fräswerkzeuge (1) um die Rotationsachse (3) des Werkzeugkörpers (2), mit einem vorbestimmten Verhältnis zwischen der Drehgeschwindigkeit des Fräswerkzeugs (1) und der Drehgeschwindigkeit des Werkstücks (8), in derselben Rotationsrichtung (R1) wie das Werkstück (8), wenn die Zähne (60) Innenzähne am Werkstück (8) sind, oder in einer entgegengesetzten Rotationsrichtung (R2), wenn die Zähne (60) Außenzähne am Werkstück (8) sind, während die Rotationsachse (3) des Werkzeugkörpers (2) parallel zur Mittelachse (4) des Werkstücks (8) gehalten wird und das Fräswerkzeug (1) entlang einer vorbestimmten Bahn in Bezug auf das Werkstück (8) bewegt wird, wobei wenigstens eine der einen oder mehreren Schneidkanten (11, 12) des Fräswerkzeugs (1) der zweiten (9b) der beiden Endflächen des Werkstücks (8) zugewandt ist, so dass diese wenigstens eine Schneidkante die dritten Flankenkanten (63) der Zähne (60) in einer Bearbeitungsrichtung von der Zahnwurzel (66) zur Zahnspitze (65) jedes Zahnes (60) anfast, und
d) Rotieren des Werkstücks (8) um seine Mittelachse (4) in einer Rotationsrichtung (R2) mit den ersten Zahnflankenflächen (67a) als führenden Zahnflankenflächen und mit den zweiten Zahnflankenflächen (67b) als nachlaufenden Zahnflankenflächen und gleichzeitiges Rotieren eines der einen oder mehreren Fräswerkzeuge (1) um die Rotationsachse (3) des Werkzeugkörpers (2), mit einem vorbestimmten Verhältnis zwischen der Drehgeschwindigkeit des Fräswerkzeugs (1) und der Drehgeschwindigkeit des Werkstücks (8), in derselben Rotationsrichtung (R2) wie das Werkstück (8), wenn die Zähne (60) Innenzähne am Werkstück (8) sind, oder in einer entgegengesetzten Rotationsrichtung (R1), wenn die Zähne (60) Außenzähne am Werkstück (8) sind, während die Rotationsachse (3) des Werkzeugkörpers (2) parallel zur Mittelachse (4) des Werkstücks (8) gehalten wird und das Fräswerkzeug (1) entlang einer vorbestimmten Bahn in Bezug auf das Werkstück (8) bewegt wird, wobei wenigstens eine der einen oder mehreren Schneidkanten (11, 12) des Fräswerkzeugs (1) der zweiten (9b) der beiden Endflächen des Werkstücks (8) zugewandt ist, so dass diese wenigstens eine Schneidkante die vierten Flankenkanten (64) der Zähne (60) in einer Bearbeitungsrichtung von der Zahnwurzel (66) zur Zahnspitze (65) jedes Zahnes (60) anfast.

7. Verfahren nach einem der Ansprüche 1 bis 6, wobei das Werkstück (8) in Schritt a in einer ersten Rotationsrichtung (R1) rotiert wird und in Schritt b in einer zweiten Rotationsrichtung (R2) entgegengesetzt zur ersten Rotationsrichtung (R1) rotiert wird, während es in derselben Ausrichtung wie in Schritt a gehalten wird.

8. Verfahren nach Anspruch 7, wobei
- das Anfasen in Schritt a und das Anfasen in Schritt b mittels ein und desselben Fräswerkzeugs (1) durchgeführt werden, das wenigstens eine erste Schneidkante (11) aufweist, die der ersten (9a) der beiden Endflächen des Werkstücks (8) zugewandt ist und die erste und zweite Flankenkante (61, 62) der Zähne (60) in den Schritten a und b fasen, wobei der Werkzeugkörper (2) dieses Fräswerkzeugs (1) an einem hinteren Ende (2b) einen hinteren Teil (6) aufweist, der für die Anbringung an der Maschine eingerichtet ist, und
- die wenigstens eine erste Schneidkante (11) sich im Wesentlichen geradlinig in einer die Rotationsachse (3) des Werkzeugkörpers (2) des Fräswerkzeugs (1) enthaltenden Ebene (P3) erstreckt und an einem Übergang zwischen einer ersten Fläche (31) und einer zweiten Fläche (32) an einem Schneideinsatz (16) ausgebildet ist, der lösbar an einem im Werkzeugkörper (2) vorgesehenen Einsatzsitz (17) angebracht ist, wobei die erste Fläche (31) als Spanfläche und die zweite Fläche (32) als Freifläche wirkt, wenn das Fräswerkzeug (1) in einer Rotationsrichtung um die Rotationsachse (3) des Werkzeugkörpers (2) rotiert wird und durch diese wenigstens eine erste Schneidkante (11) das Anfasen erfolgt, wobei die erste Fläche (31) als Freifläche und die zweite Fläche (32) als Spanfläche wirkt, wenn das Fräswerkzeug (1) in einer anderen, entgegengesetzten Rotationsrichtung um die Rotationsachse (3) des Werkzeugkörpers (2) rotiert wird und durch diese wenigstens eine erste Schneidkante (11) das Anfasen erfolgt.

9. Verfahren nach Anspruch 8, wobei die erste Fläche (31) und die zweite Fläche (32) zueinander spiegelbildlich in Bezug auf die Ebene (P3) sind.

10. Verfahren nach Anspruch 8 oder 9, wobei die wenigstens eine erste Schneidkante (11) ein vorderes Ende (11a) und ein gegenüberliegendes hinteres Ende (11b) aufweist, wobei das hintere Ende (11b) dieser wenigstens einen ersten Schneidkante (11) näher am hinteren Teil (6) des Werkzeugkörpers angeordnet ist als das vordere Ende (11a) dieser wenigstens einen ersten Schneidkante (11), wobei das vordere Ende (11a) dieser wenigstens einen ersten Schneidkante (11) näher an der Rotationsachse (3) des Werkzeugkörpers (2) angeordnet ist als das hintere Ende (11b) dieser wenigstens einen ersten Schneidkante (11) und der Abstand zwischen dieser wenigstens einen ersten Schneidkante (11) und der Rotationsachse (3) des Werkzeugkörpers (2) in einer Richtung entlang dieser wenigstens einen ersten Schneidkante (11) allmählich zunimmt.

11. Verfahren nach Anspruch 10, wobei die wenigstens eine erste Schneidkante (11) in der Ebene (P3) eine solche Neigung aufweist, dass eine Verlängerung dieser ersten Schneidkante (11) mit der Rotationsachse (3) des Werkzeugkörpers (2) einen Winkel (α₁) bildet, der größer oder gleich 20° und kleiner als 90°, vorzugsweise 30-80°, ist.

12. Verfahren nach einem der Ansprüche 8 bis 11 in Kombination mit Anspruch 6, wobei
- das Anfasen in Schritt c und das Anfasen in Schritt d mit demselben Fräswerkzeug (1) wie das Anfasen in den Schritten a und b durchgeführt werden,
- das Fräswerkzeug (1) wenigstens eine zweite Schneidkante (12) aufweist, die der zweiten (9b) der beiden Endflächen des Werkstücks (8) zugewandt ist und die dritte und vierte Flankenkante (63, 64) der Zähne (60) in den Schritten c und d anfast,
- die wenigstens eine erste Schneidkante (11) vom hinteren Teil (6) des Werkzeugkörpers (2) wegweist und die wenigstens eine zweite Schneidkante (12) zum hinteren Teil (6) des Werkzeugkörpers (2) hinweist und näher am hinteren Teil (6) angeordnet ist als die wenigstens eine erste Schneidkante (11),
- die wenigstens eine zweite Schneidkante (12) sich im Wesentlichen geradlinig in einer die Rotationsachse (3) des Werkzeugkörpers (2) enthaltenden Ebene (P4) erstreckt und an einem Übergang zwischen einer dritten Fläche (33) und einer vierten Fläche (34) an dem Schneideinsatz (16) ausgebildet ist, wobei die dritte Fläche (33) als Spanfläche und die vierte Fläche (34) als Freifläche wirkt, wenn das Fräswerkzeug (1) in einer Rotationsrichtung um die Rotationsachse (3) des Werkzeugkörpers (2) rotiert wird und durch diese wenigstens eine zweite Schneidkante (12) das Anfasen erfolgt, wobei die dritte Fläche (33) als Freifläche und die vierte Fläche (34) als Spanfläche wirkt, wenn das Fräswerkzeug (1) in einer anderen, entgegengesetzten Rotationsrichtung um die Rotationsachse (3) des Werkzeugkörpers (2) rotiert wird und durch diese wenigstens eine zweite Schneide (12) das Anfasen erfolgt,
- der Werkzeugkörper (2) ein Schneidteil (10), das in einem Abstand vom hinteren Teil (6) angeordnet ist, und einen länglichen Schaftteil (40) aufweist, der das Schneidteil (10) trägt und sich vom Schneidteil (10) zum hinteren Teil (6) erstreckt und ein dem Schneidteil (10) zugewandtes vorderes Ende (40a) aufweist, einem gegenüberliegenden hinteren Ende (40b) und einer Umfangsfläche (41), die sich zwischen dem hinteren Ende (40b) und dem vorderen Ende (40a) des Schaftteils (40) um diesen herum erstreckt, wobei der Schaftteil (40) eine Längsmittelachse aufweist, die mit der Rotationsachse (3) des Werkzeugkörpers (2) zusammenfällt,
- die wenigstens eine zweite Schneidkante (12) in einem größeren Abstand von der Rotationsachse (3) des Werkzeugkörpers (2) angeordnet ist als ein radial äußerster Teil der Umfangsfläche (41) des Schaftteils (40), und
- der Schneidteil (10) einen axial vordersten Teil des Werkzeugkörpers (2) bildet oder der Werkzeugkörper (2) einen vorderen Teil (7) aufweist, der an der dem hinteren Teil (6) des Werkzeugkörpers (2) abgewandten Seite von dem Schneidteil (10) vorsteht, wobei die wenigstens eine erste Schneidkante (11) in einem größeren Abstand von der Rotationsachse (3) des Werkzeugkörpers (2) angeordnet ist als ein radial äußerster Teil dieses vorderen Teils (7).

13. Verfahren nach Anspruch 12, wobei die dritte Fläche (33) und die vierte Fläche (34) zueinander spiegelbildlich in Bezug auf die Ebene (P4) sind, in der sich die wenigstens eine zweite Schneidkante (12) erstreckt.

14. Verfahren nach Anspruch 12 oder 13, wobei die wenigstens eine zweite Schneidkante (12) ein vorderes Ende (12a) und ein gegenüberliegendes hinteres Ende (12b) aufweist, wobei das hintere Ende (12b) dieser wenigstens einen zweiten Schneidkante (12) näher am hinteren Teil (6) des Werkzeugkörpers angeordnet ist als das vordere Ende (12a) dieser wenigstens einen zweiten Schneidkante (12), wobei das hintere Ende (12b) dieser wenigstens einen zweiten Schneidkante (12) näher an der Rotationsachse (3) des Werkzeugkörpers (2) angeordnet ist als das vordere Ende (12a) dieser wenigstens einen zweiten Schneidkante (12) und der Abstand zwischen dieser wenigstens einen zweiten Schneidkante (12) und der Rotationsachse (3) des Werkzeugkörpers (2) in einer Richtung entlang dieser wenigstens einen zweiten Schneidkante (12) vom hinteren Ende (12b) zu ihrem vorderen Ende (12a) gesehen allmählich zunimmt.

15. Verfahren nach Anspruch 14, wobei die wenigstens eine zweite Schneidkante (12) in der Ebene (P4), in der sie verläuft, eine solche Neigung aufweist, dass eine Verlängerung dieser zweiten Schneidkante (12) mit der Rotationsachse (3) des Werkzeugkörpers (2) einen Winkel (α₂) bildet, der größer oder gleich 20° und kleiner als 90°, vorzugsweise 30-80°, ist.

16. Computerprogramm mit Anweisungen, die bei Ausführung durch eine CNC-Maschine die CNC-Maschine veranlassen, die Schritte gemäß einem der Ansprüche 1 bis 15 auszuführen.

## Revendications

1. Procédé de chanfreinage de bords de flanc de dents internes ou externes (60) sur une pièce à usiner dentée cylindrique (8) au niveau d'au moins une de deux faces d'extrémité opposées (9a, 9b) de la pièce à usiner (8), où chacune desdites dents (60) présente une pointe de dent (65), une racine de dent (66), une première surface de flanc de dent (67a) s'étendant entre la pointe de dent (65) et la racine de dent (66) sur un premier côté de la dent et une seconde surface de flanc de dent (67b) s'étendant entre la pointe de dent (65) et la racine de dent (66) sur un second côté opposé de la dent, un premier bord de flanc (61) étant formé au niveau d'une intersection entre la première surface de flanc de dent (67a) et une première (9a) des deux faces d'extrémité de la pièce à usiner (8), un deuxième bord de flanc (62) étant formé au niveau d'une intersection entre la seconde surface de flanc de dent (67b) et ladite première (9a) des deux faces d'extrémité de la pièce à usiner (8), un troisième bord de flanc (63) étant formé au niveau d'une intersection entre la première surface de flanc de dent (67a) et une seconde (9b) des deux faces d'extrémité de la pièce à usiner (8) et un quatrième bord de flanc (64) étant formé au niveau d'une intersection entre la seconde surface de flanc de dent (67b) et ladite seconde (9b) des deux faces d'extrémité de la pièce à usiner (8), où la pièce à usiner (8) peut être entraînée en rotation par une machine autour d'un axe central (4) de la pièce à usiner (8) et où le chanfreinage es réalisé au moyen d'un ou plusieurs outils de fraisage (1), chacun d'entre eux comprenant un corps d'outil (2) et une ou plusieurs arêtes de coupe (11, 12) prévues sur le corps d'outil et chacun d'entre eux pouvant être entraîné en rotation par la machine autour d'un axe de rotation (3) du corps d'outil (2) et pouvant être déplacé par la machine par rapport à la pièce à usiner (8) dans une direction axiale (z) de la pièce à usiner (8) et dans différentes directions dans un plan (x, y) perpendiculaire à l'axe central (4) de la pièce à usiner (8) avec l'axe de rotation (3) du corps d'outil (2) parallèle à l'axe central (4) de la pièce à usiner (8), le procédé comprenant les étapes suivantes consistant à :
a) entraîner en rotation la pièce à usiner (8) autour de son axe central (4) dans un sens de rotation (R1) avec les secondes surfaces de flanc de dent (67b) comme surfaces de flanc de dent avant et avec les premières surfaces de flanc de dent (67a) comme surfaces de flanc de dent arrière et simultanément entraîner en rotation l'un desdits un ou plusieurs outils de fraisage (1) autour de l'axe de rotation (3) du corps d'outil (2), avec une relation prédéfinie entre la vitesse de rotation de l'outil de fraisage (1) et la vitesse de rotation de la pièce à usiner (8), dans le même sens de rotation (R1) que la pièce à usiner (8) lorsque lesdites dents (60) sont des dents internes sur la pièce à usiner (8) ou dans un sens de rotation opposé (R2) lorsque lesdites dents (60) sont des dents externes sur la pièce à usiner (8), tout en gardant l'axe de rotation (3) du corps d'outil (2) parallèle à l'axe central (4) de la pièce à usiner (8) et en déplaçant l'outil de fraisage (1) le long d'un trajet prédéfini par rapport à la pièce à usiner (8) avec au moins l'une desdites une ou plusieurs arêtes de coupe (11, 12) de l'outil de fraisage (1) faisant face à la première (9a) des deux faces d'extrémité de la pièce à usiner (8) de telle sorte que cette au moins une arête de coupe chanfreine les premiers bords de flanc (61) desdites dents (60) dans une direction d'usinage de la racine de dent (66) vers la pointe de dent (65) de chaque dent (60) ; et
b) entraîner en rotation la pièce à usiner (8) autour de son axe central (4) dans un sens de rotation (R2) avec les premières surfaces de flanc de dent (67a) comme surfaces de flanc de dent avant et avec les secondes surfaces de flanc de dent (67b) comme surfaces de flanc de dent arrière et simultanément entraîner en rotation l'un desdits un ou plusieurs outils de fraisage (1) autour de l'axe de rotation (3) du corps d'outil (2), avec une relation prédéfinie entre la vitesse de rotation de l'outil de fraisage (1) et la vitesse de rotation de la pièce à usiner (8), dans le même sens de rotation (R2) que la pièce à usiner (8) lorsque lesdites dents (60) sont des dents internes sur la pièce à usiner (8) ou dans un sens de rotation opposé (R1) lorsque lesdites dents (60) sont des dents externes sur la pièce à usiner (8), tout en gardant l'axe de rotation (3) du corps d'outil (2) parallèle à l'axe central (4) de la pièce à usiner (8) et en déplaçant l'outil de fraisage (1) le long d'un trajet prédéfini par rapport à la pièce à usiner (8) avec au moins l'une desdites une ou plusieurs arêtes de coupe (11, 12) de l'outil de fraisage (1) faisant face à la première (9a) des deux faces d'extrémité de la pièce à usiner (8) de telle sorte que cette au moins une arête de coupe chanfreine les deuxièmes bords de flanc (62) desdites dents (60) dans une direction d'usinage de la racine de dent (66) vers la pointe de dent (65) de chaque dent (60).

2. Procédé selon la revendication 1, dans lequel ledit trajet prédéfini pour le déplacement de l'outil de fraisage (1) par rapport à la pièce à usiner (8) à l'étape a comprend au moins une partie dans laquelle l'outil de fraisage (1) est déplacé dans sa direction axiale pour déplacer ainsi l'arête de coupe ou les arêtes de coupe faisant face à la première (9a) des deux faces d'extrémité de la pièce à usiner (8) dans une direction vers cette face d'extrémité (9a).

3. Procédé selon la revendication 1 ou 2, dans lequel ledit trajet prédéfini pour le déplacement de l'outil de fraisage (1) par rapport à la pièce à usiner (8) à l'étape a comprend au moins une partie dans laquelle la distance entre l'axe de rotation (3) du corps d'outil (2) et l'axe central (4) de la pièce à usiner (8) est modifiée.

4. Procédé selon l'une quelconque des revendications 1 à 3, dans lequel ledit trajet prédéfini pour le déplacement de l'outil de fraisage (1) par rapport à la pièce à usiner (8) à l'étape b comprend au moins une partie dans laquelle l'outil de fraisage (1) est déplacé dans sa direction axiale pour déplacer ainsi l'arête de coupe ou les arêtes de coupe faisant face à la première (9a) des deux faces d'extrémité de la pièce à usiner (8) dans une direction vers cette face d'extrémité (9a).

5. Procédé selon l'une quelconque des revendications 1 à 4, dans lequel ledit trajet prédéfini pour le déplacement de l'outil de fraisage (1) par rapport à la pièce à usiner (8) à l'étape b comprend au moins une partie dans laquelle la distance entre l'axe de rotation (3) du corps d'outil (2) et l'axe central (4) de la pièce à usiner (8) est modifiée.

6. Procédé selon l'une quelconque des revendications 1 à 5, où le procédé comprend les étapes supplémentaires suivantes consistant à :
c) entraîner en rotation la pièce à usiner (8) autour de son axe central (4) dans un sens de rotation (R1) avec les secondes surfaces de flanc de dent (67b) comme surfaces de flanc de dent avant et avec les premières surfaces de flanc de dent (67a) comme surfaces de flanc de dent arrière et simultanément entraîner en rotation l'un desdits un ou plusieurs outils de fraisage (1) autour de l'axe de rotation (3) du corps d'outil (2), avec une relation prédéfinie entre la vitesse de rotation de l'outil de fraisage (1) et la vitesse de rotation de la pièce à usiner (8), dans le même sens de rotation (R1) que la pièce à usiner (8) lorsque lesdites dents (60) sont des dents internes sur la pièce à usiner (8) ou dans un sens de rotation opposé (R2) lorsque lesdites dents (60) sont des dents externes sur la pièce à usiner (8), tout en gardant l'axe de rotation (3) du corps d'outil (2) parallèle à l'axe central (4) de la pièce à usiner (8) et en déplaçant l'outil de fraisage (1) le long d'un trajet prédéfini par rapport à la pièce à usiner (8) avec au moins l'une desdites une ou plusieurs arêtes de coupe (11, 12) de l'outil de fraisage (1) faisant face à la seconde (9b) des deux faces d'extrémité de la pièce à usiner (8) de telle sorte que cette au moins une arête de coupe chanfreine les troisièmes bords de flanc (63) desdites dents (60) dans une direction d'usinage de la racine de dent (66) vers la pointe de dent (65) de chaque dent (60) ; et
d) entraîner en rotation la pièce à usiner (8) autour de son axe central (4) dans un sens de rotation (R2) avec les premières surfaces de flanc de dent (67a) comme surfaces de flanc de dent avant et avec les secondes surfaces de flanc de dent (67b) comme surfaces de flanc de dent arrière et simultanément entraîner en rotation l'un desdits un ou plusieurs outils de fraisage (1) autour de l'axe de rotation (3) du corps d'outil (2), avec une relation prédéfinie entre la vitesse de rotation de l'outil de fraisage (1) et la vitesse de rotation de la pièce à usiner (8), dans le même sens de rotation (R2) que la pièce à usiner (8) lorsque lesdites dents (60) sont des dents internes sur la pièce à usiner (8) ou dans un sens de rotation opposé (R1) lorsque lesdites dents (60) sont des dents externes sur la pièce à usiner (8), tout en gardant l'axe de rotation (3) du corps d'outil (2) parallèle à l'axe central (4) de la pièce à usiner (8) et en déplaçant l'outil de fraisage (1) le long d'un trajet prédéfini par rapport à la pièce à usiner (8) avec au moins l'une desdites une ou plusieurs arêtes de coupe (11, 12) de l'outil de fraisage (1) faisant face à la seconde (9b) des deux faces d'extrémité de la pièce à usiner (8) de telle sorte que cette au moins une arête de coupe chanfreine les quatrièmes bords de flanc (64) desdites dents (60) dans une direction d'usinage de la racine de dent (66) vers la pointe de dent (65) de chaque dent (60).

7. Procédé selon l'une quelconque des revendications 1 à 6, dans lequel la pièce à usiner (8) à l'étape a est entraînée en rotation dans un premier sens de rotation (R1) et à l'étape b est entraînée en rotation dans un second sens de rotation (R2) opposé au premier sens de rotation (R1), tout en étant gardée dans la même orientation qu'à l'étape a.

8. Procédé selon la revendication 7, dans lequel :
- le chanfreinage à l'étape a et le chanfreinage à l'étape b sont réalisés au moyen d'un seul et même outil de fraisage (1), lequel comprend au moins une première arête de coupe (11) qui fait face à la première (9a) des deux faces d'extrémité de la pièce à usiner (8) et chanfreine les premiers et deuxièmes bords de flanc (61, 62) desdites dents (60) aux étapes a et b, où le corps d'outil (2) de cet outil de fraisage (1) au niveau d'une extrémité arrière (2b) présente une partie arrière (6) configurée pour être attachée à la machine ; et
- ladite au moins une première arête de coupe (11) s'étend sensiblement rectilignement dans un plan (P3) contenant l'axe de rotation (3) du corps d'outil (2) de l'outil de fraisage (1) et est formée au niveau d'une intersection entre une première surface (31) et une deuxième surface (32) sur une plaquette de coupe (16) montée de manière amovible sur un siège de plaquette (17) ménagé dans le corps d'outil (2), où ladite première surface (31) sert de face d'attaque et ladite deuxième surface (32) sert de face de dépouille lorsque l'outil de fraisage (1) est entraîné en rotation dans un premier sens de rotation autour de l'axe de rotation (3) du corps d'outil (2) et un chanfreinage est réalisé par cette au moins une première arête de coupe (11), tandis que ladite première surface (31) sert de face de dépouille et ladite deuxième surface (32) sert de face d'attaque lorsque l'outil de fraisage (1) est entraîné en rotation dans un autre sens de rotation opposé autour de l'axe de rotation (3) du corps d'outil (2) et un chanfreinage est réalisé par cette au moins une première arête de coupe (11).

9. Procédé selon la revendication 8, dans lequel ladite première surface (31) et ladite deuxième surface (32) sont symétriques en miroir par rapport audit plan (P3).

10. Procédé selon la revendication 8 ou 9, dans lequel ladite au moins une première arête de coupe (11) présente une extrémité avant (11a) et une extrémité arrière opposée (11b), l'extrémité arrière (11b) de cette au moins une première arête de coupe (11) étant située plus près de la partie arrière (6) du corps d'outil que l'extrémité avant (11a) de cette au moins une première arête de coupe (11), où l'extrémité avant (11a) de cette au moins une première arête de coupe (11) est située plus près de l'axe de rotation (3) du corps d'outil (2) que l'extrémité arrière (11b) de cette au moins une première arête de coupe (11) et la distance entre cette au moins une première arête de coupe (11) et l'axe de rotation (3) du corps d'outil (2) augmente progressivement selon une vue dans une direction le long de cette au moins une première arête de coupe (11) depuis l'extrémité avant (11a) de celle-ci vers l'extrémité arrière (11b) de celle-ci.

11. Procédé selon la revendication 10, dans lequel ladite au moins une première arête de coupe (11) présente une inclinaison telle dans ledit plan (P3) qu'un prolongement de cette première arête de coupe (11) forme un angle (α₁) avec l'axe de rotation (3) du corps d'outil (2) supérieur ou égal à 20° et inférieur à 90°, de préférence de 30 à 80°.

12. Procédé selon l'une quelconque des revendications 8 à 11 en association avec la revendication 6, dans lequel :
- le chanfreinage à l'étape c et le chanfreinage à l'étape d sont réalisés au moyen du même outil de fraisage (1) que le chanfreinage aux étapes a et b ;
- l'outil de fraisage (1) comprend au moins une seconde arête de coupe (12) qui fait face à la seconde (9b) des deux faces d'extrémité de la pièce à usiner (8) et chanfreine les troisièmes et quatrièmes bords de flanc (63, 64) desdites dents (60) aux étapes c et d ;
- ladite au moins une première arête de coupe (11) est orientée vers l'opposé de la partie arrière (6) du corps d'outil (2) et ladite au moins une seconde arête de coupe (12) fait face à la partie arrière (6) du corps d'outil (2) et est située plus près de la partie arrière (6) que ladite au moins une première arête de coupe (11) ;
- ladite au moins une seconde arête de coupe (12) s'étend sensiblement rectilignement dans un plan (P4) contenant l'axe de rotation (3) du corps d'outil (2) et est formée au niveau d'une intersection entre une troisième surface (33) et une quatrième surface (34) sur ladite plaquette de coupe (16), où ladite troisième surface (33) sert de face d'attaque et ladite quatrième surface (34) sert de face de dépouille lorsque l'outil de fraisage (1) est entraîné en rotation dans un premier sens de rotation autour de l'axe de rotation (3) du corps d'outil (2) et un chanfreinage est réalisé par cette au moins une seconde arête de coupe (12), tandis que ladite troisième surface (33) sert de face de dépouille et ladite quatrième surface (34) sert de face d'attaque lorsque l'outil de fraisage (1) est entraîné en rotation dans un autre sens de rotation opposé autour de l'axe de rotation (3) du corps d'outil (2) et un chanfreinage est réalisé par cette au moins une seconde arête de coupe (12) ;
- le corps d'outil (2) comprend une partie de coupe (10), qui est située à une distance de la partie arrière (6), et une partie de queue allongée (40), qui porte la partie de coupe (10) et s'étend de la partie de coupe (10) jusqu'à la partie arrière (6) et qui présente une extrémité avant (40a) faisant face à la partie de coupe (10), une extrémité arrière opposée (40b) et une surface périphérique (41) s'étendant autour de la partie de queue (40) entre l'extrémité arrière (40b) et l'extrémité avant (40a) de celle-ci, où la partie de queue (40) présente un axe central longitudinal qui coïncide avec l'axe de rotation (3) du corps d'outil (2) ;
- ladite au moins une seconde arête de coupe (12) est située à une plus grande distance de l'axe de rotation (3) du corps d'outil (2) qu'une partie radialement la plus extérieure de la surface périphérique (41) de la partie de queue (40) ; et
- la partie de coupe (10) constitue une partie axialement la plus à l'avant du corps d'outil (2) ou le corps d'outil (2) comprend une partie avant (7) qui dépasse de la partie de coupe (10) sur le côté de celle-ci orienté vers l'opposé de la partie arrière (6) du corps d'outil (2), où ladite au moins une première arête de coupe (11) est située à une plus grande distance de l'axe de rotation (3) du corps d'outil (2) qu'une partie radialement la plus extérieure de cette partie avant (7).

13. Procédé selon la revendication 12, dans lequel ladite troisième surface (33) et ladite quatrième surface (34) sont symétriques en miroir par rapport au plan (P4) dans lequel ladite au moins une seconde arête de coupe (12) s'étend.

14. Procédé selon la revendication 12 ou 13, dans lequel ladite au moins une seconde arête de coupe (12) présente une extrémité avant (12a) et une extrémité arrière opposée (12b), l'extrémité arrière (12b) de cette au moins une seconde arête de coupe (12) étant située plus près de la partie arrière (6) du corps d'outil que l'extrémité avant (12a) de cette au moins une seconde arête de coupe (12), où l'extrémité arrière (12b) de cette au moins une seconde arête de coupe (12) est située plus près de l'axe de rotation (3) du corps d'outil (2) que l'extrémité avant (12a) de cette au moins une seconde arête de coupe (12) et la distance entre cette au moins une seconde arête de coupe (12) et l'axe de rotation (3) du corps d'outil (2) augmente progressivement selon une vue dans une direction le long de cette au moins une seconde arête de coupe (12) depuis l'extrémité arrière (12b) de celle-ci vers l'extrémité avant (12a) de celle-ci.

15. Procédé selon la revendication 14, dans lequel ladite au moins une seconde arête de coupe (12) présente une inclinaison telle dans le plan (P4) dans lequel elle s'étend qu'un prolongement de cette seconde arête de coupe (12) forme un angle (α₂) avec l'axe de rotation (3) du corps d'outil (2) supérieur ou égal à 20° et inférieur à 90°, de préférence de 30 à 80°.

16. Programme informatique présentant des instructions qui lorsqu'elles sont exécutées par une machine CNC amène la machine CNC à réaliser les étapes selon l'une quelconque des revendications 1 à 15*.*
